# EUROPÄISCHE PATENTSCHRIFT

(11) **EP 2 715 673 B1**
(45) Veröffentlichungstag und Bekanntmachung des Hinweises auf die Patenterteilung: **22.11.2017**
(21) Anmeldenummer: 12722117.4
(22) Anmeldetag: 14.05.2012
(51) Int. Cl.: G06T 17/00, G06T 17/20

(54) **VERFAHREN ZUR HYPERFLÄCHENKONSTRUKTION IN N DIMENSIONEN**
METHOD FOR HYPERSURFACE CONSTRUCTION IN N DIMENSIONS
PROCÉDÉ PERMETTANT LA CONSTRUCTION D'HYPERSURFACES DANS N DIMENSIONS

(30) Priorität: 30.05.2011 DE 102011050721; 20.06.2011 DE 102011051203
(43) Veröffentlichungstag der Anmeldung: 09.04.2014
(73) Patentinhaber: GSI Helmholtzzentrum für Schwerionenforschung GmbH, 64291 Darmstadt (DE)
(72) Erfinder: SCHLEI, Bernd, 34454 Bad Arolsen (DE)
(86) Internationale Anmeldenummer: PCT/EP2012/058873
(87) Internationale Veröffentlichungsnummer: WO 2012/163657

(56) Entgegenhaltungen:
- B.R. SCHLEI: "Speeding Up the 3D Surface Generator VESTA", arXiv.org e-Print archive , 14. Dezember 2010 (2010-12-14), 22. August 2012 (2012-08-22), XP002682286, Gefunden im Internet: URL:http://arxiv.org/abs/1012.3057v1 [gefunden am 2012-08-22]
- B.R. Schlei: "Volume-Enclosing Surface Extraction", arXiv.org e-Print archive , 1. November 2010 (2010-11-01), XP002682287, Gefunden im Internet: URL:http://arxiv.org/abs/1011.1787v1 [gefunden am 2012-08-22]
- Bernd R. Schlei: "Numerical freeze-out hyper-surface extraction Numerical freeze-out hyper-surface extractionin four dimensions with the STEVE algorithm in four dimensions with the STEVE algorithm", Uni Frankfurt, Deutschland , 6. Mai 2009 (2009-05-06), XP002682288, Gefunden im Internet: URL:http://th.physik.uni-frankfurt.de/~pes hier/workshop_freeze-out/Schlei.pdf [gefunden am 2012-08-22]
- BHANIRAMKA P ET AL: "Isosurface construction in any dimension using convex hulls", IEEE TRANSACTIONS ON VISUALIZATION AND COMPUTER GRAPHICS, IEEE SERVICE CENTER, LOS ALAMITOS, CA, US, Bd. 10, Nr. 2, 1. März 2004 (2004-03-01), Seiten 130-141, XP011105510, ISSN: 1077-2626, DOI: 10.1109/TVCG.2004.1260765
- BHANIRAMKA P ET AL: "Isosurfacing in higher dimensions", PROCEEDINGS VISUALIZATION 2000. VIS 2000 (CAT. NO.00CH37145) IEEE PISCATAWAY, NJ, USA, 2000, Seiten 267-273 , 566, XP002682289, ISBN: 0-7803-6478-3
- NEWMAN T S ET AL: "A survey of the marching cubes algorithm", COMPUTERS AND GRAPHICS, ELSEVIER, GB, vol. 30, no. 5, 1 October 2006 (2006-10-01), pages 854-879, XP027942617, ISSN: 0097-8493 [retrieved on 2006-10-01]

## Beschreibung

Die Erfindung betrifft ein Verfahren zur Bestimmung von Grenz-Hyperflächen aus Daten-Matrizen. Weiterhin betrifft die Erfindung eine Vorrichtung zur Bestimmung von Grenz-Hyperflächen aus Daten-Matrizen.

In vielen Gebieten der Technik sowie der Forschung werden Messungen in Abhängigkeit von unterschiedlichen Parameterwerten gewonnen. Dabei werden einzelne, eine Mehrzahl bzw. alle der Parameter, von denen der Messwert abhängt, sukzessive durchvariiert und der jeweilige Messwert in Abhängigkeit vom jeweiligen Parametersatz ermittelt. Um die Messdauer nicht über Gebühr ansteigen zu lassen, werden manche Parameter - insbesondere solche Parameter, die einen nur geringen Einfluss haben und/oder für das jeweilige Anwendungsgebiet irrelevant sind - auf einem fixen Wert gehalten und nicht verändert. Werden beispielsweise n Parameter variiert, so erhält man eine n-dimensionale Wertematrix. Im jeweiligen Matrixelement ist dabei der jeweils ermittelte Messwerte gespeichert.

Um mit den derart gewonnenen (Roh-)Messwerten analytische und/oder numerische Modelle aufstellen zu können bzw. weitere Berechnungen anstellen zu können, ist es in der Regel erforderlich diese (Roh-)Daten zunächst in ein anderes Format umzurechnen. Eine in diesem Zusammenhang häufig verwendete Umrechnung ist das Ermitteln von Grenzkonturen (im 2D-Fall einer Grenzlinie; im 3D-Fall einer Grenz-Oberfläche), die eine Begrenzung zwischen Messwerten, die unterhalb eines bestimmten Wertes liegen, und Messwerten, die oberhalb dieses bestimmten Messwerts liegen, darstellen.

Ein besonders einsichtiges und in der Praxis vielfach genutztes Einsatzgebiet für die Ermittlung derartiger Begrenzungen liegt bei Bilddaten vor, die beispielsweise durch Tomographieverfahren (wobei die Art der Bilderzeugung unerheblich ist; beispielsweise können Bildwerte mithilfe von Röntgenstrahlen, Kernspinverfahren oder Ultraschallverfahren gewonnen werden) gewonnen werden. Derartige Tomographieverfahren werden in unterschiedlichsten Bereichen der Technik verwendet.

Das vielleicht bekannteste und verbreitetste Einsatzgebiet hierfür liegt im Bereich der Medizintechnik vor. Hierbei stehen die gewonnenen Messwerte für bestimmte Materialeigenschaften (speziell Gewebeeigenschaften), wie beispielsweise die Dichte des Gewebes. Die Messwerte werden dabei typischerweise in drei Dimensionen gewonnen. Eine Darstellung der Daten kann dann beispielsweise in Form von Graustufendarstellungen erfolgen. Mithilfe derartiger Graustufendarstellungen kann man beispielsweise unterschiedliche. Gewebebereiche (zum Beispiel Organe, Knochen, Zysten, Tumore, luftgefüllte Hohlräume und dergleichen) voneinander unterscheiden. Sollen die gewonnenen Daten jedoch insbesondere automatisiert weiterverarbeitet werden und/oder zu anderen Zwecken als zum reinen Betrachten weiter genutzt werden, so ist es oftmals unumgänglich eine automatisierte Berechnung von Grenzoberflächen (bei dreidimensional vorliegenden Daten) möglichst ohne Benutzereingriff durchzuführen.

Im Stand der Technik wird hierzu auf den so genannten "Marching Cubes Algorithmus" zurückgegriffen, der Mitte der achtziger Jahre von W. E. Lorensen und H. E. Cline entwickelt wurde (siehe W. E. Lorensen und H. E. Cline, "Marching Cubes: A High Resolution 3D Surface Construction Algorithm", Comput. Graph. Vol. 21 (1987), S. 163-169). Bei diesem Algorithmus wird das dreidimensionale Gitter sukzessive durchwandert. Stellt der Algorithmus fest, dass zwischen zwei benachbart zueinander liegenden 3D-Gitterpunkten der jeweilige Messwert einmal oberhalb des Grenzwerts, einmal unterhalb des Grenzwerts liegt, so schließt der Algorithmus hieraus, dass hier eine Grenzfläche anzuordnen ist. Diese Feststellung, ob und gegebenenfalls wo eine Grenzfläche anzuordnen ist oder nicht, wird ausgehend von einem (sich verändernden) zentralen Gitterpunkt in Relation zu sämtlichen umliegenden Gitterpunkten durchgeführt. Mit dem "gesammelten" Wissen, in welchen Eck- bzw. Kantenbereichen eine Grenzfläche anzuordnen ist, wird aus einem Satz von Basis-Grenzflächenanordnungen (so genannten "Templates") die geeignetste Basis-Grenzflächenanordnung (also das geeignetste "Template") gewählt. Diese Überprüfung wird sukzessive für sämtliche Gitterpunkte durchgeführt. Anschließend werden die derart ermittelten Basis-Grenzflächenanordnungen miteinander verbunden, so dass vollständige Grenzoberflächen entstehen.

Auch wenn der "Marching Cubes"-Algorithmus in der Praxis oftmals sinnvolle Grenz-Oberflächen ermittelt, leidet er dennoch unter spürbaren und relevanten Problemen. Ein erstes Problem besteht in der Auswahl des Satzes an "Templates". Wird dieser Satz zu groß gewählt, so benötigt der Algorithmus in der Regel zu viel Rechenzeit. Darüber hinaus werden derartige Template-Sätze schnell unübersichtlich, so dass hier gerne Templates "vergessen" werden. Ein weiteres Problem des "Marching Cubes"-Algorithmus besteht darin, dass die gewonnenen Oberflächen in aller Regel nicht eindeutig sind und darüber hinaus oftmals Löcher aufweisen - also nicht vollständig geschlossen sind. Dies kann bei einer Weiterverarbeitung der Grenz-Oberflächen-Daten gegebenenfalls zu massiven Problemen führen. Dieses Problem tritt insbesondere dann auf, wenn (beispielsweise aus Rechenzeitgründen) eine vergleichsweise geringe Anzahl an Basis-Oberflächenanordnungen (Templates) verwendet wird.

Auch wenn es bei dreidimensionalen Daten gegebenenfalls noch möglich erscheint, einen vollständigen Satz an Basis-Oberflächenanordnungen für ein entsprechendes Programm zu implementieren und zu nutzen, so stößt man spätestens bei vierdimensionale vorliegenden Daten (also beispielsweise zeitveränderlichen 3D-Daten) auf massive Probleme. Dementsprechend ist der "Marching Cubes"-Ansatz de facto nicht (oder nur sehr problematisch) auf allgemein n-dimensionale Probleme mit n≥4 verallgemeinerbar.

Um die bereits beschriebenen Probleme mit nicht-geschlossenen Oberflächen zu verringern (und idealerweise zu vermeiden) wurden bereits unterschiedlichste Vorschläge zur Modifizierung des grundsätzlichen "Marching Cubes"-Algorithmus vorgeschlagen. Eine Zusammenfassung bisheriger Ansätze findet sich beispielsweise in der wissenschaftlichen Veröffentlichung von T. S. Newman und H. Yi, "A Survey of the Marching Cubes Algorithm" in Computers & Graphics, Vol. 30 (2006), S. 854-879. Auch in der Patentliteratur wurden bereits Verbesserungen des "Marching Cubes"-Algorithmus beschrieben, wie beispielsweise im US-Patent US 7,538,764 B2. Auch wenn die im Stand der Technik beschriebenen Verbesserungen des ursprünglichen "Marching Cubes"-Algorithmus zum Teil deutliche Verbesserungen bringen, so weisen diese jedoch in aller Regel nach wie vor zum Teil gravierende Nachteile auf. Insbesondere ist bei im Stand der Technik bekannten Algorithmen in aller Regel das Problem von nicht-geschlossenen Grenz-Oberflächen nach wie vor vorhanden, insbesondere dann, wenn besonders ungünstige Messwertverteilungen vorliegen. In einer kürzlichen Veröffentlichung des Erfinders B.R. Schlei aus dem Jahre 2010 wurde unter dem Titel "Speeding Up the 3D Surface Generator VESTA" ein Verfahren zur Konstruktion von Grenzflächen vorgestellt, das einige der Nachteile des Marching Cubes Verfahrens überwindet und z.B. ohne Templates auskommt.

In einer weiteren Veröffentlichung des Erfinders B.R. Schlei von 2010 zu demselben Thema mit dem Titel "Volume-Enclosing Surface Extraction" wurde das vorgenannte Verfahren auch auf vier dimensionale Daten angewendet, sofern diese symmetrisch sind. Eine echte Erweiterung auf vier Dimensionen des vorgennanten Verfahrens wurde bereits 2009 vom B.R. Schlei in "Numerical freeze-out hyper-surface extraction in four dimensions with the STEVE algorithm" grob skizziert. Die Aufgabe der Erfindung besteht somit darin, ein gegenüber bekannten Verfahren verbessertes Verfahren zur Bestimmung von Grenz-Hyperflächen aus Daten-Matrizen vorzuschlagen. Eine weitere Aufgabe der Erfindung besteht darin, eine gegenüber bekannten Vorrichtungen zur Bestimmung von Grenz-Hyperflächen aus Daten-Matrizen verbesserte Vorrichtung vorzuschlagen.

Es wird vorgeschlagen, ein Verfahren zur Bestimmung von Grenz-Hyperflächen aus Daten-Matrizen gemäß den unabhängigen Ansprüchen durch zuführen. In der Regel liegen die Datenmatrizen in Form regelmäßiger Gitter, wie insbesondere quadratischer, kubischer usw. Gitter vor (wobei die entsprechenden, vorzugsweise regelmäßigen geometrischen Muster in n Dimensionen heranzuziehen sind). Jedoch ist es durchaus auch denkbar, dass andere Datenstrukturen, wie insbesondere unregelmäßige Gitter, Gitter mit unterschiedlichen Koordinaten (beispielsweise Kugelkoordinaten, Zylinderkoordinaten und dergleichen, bzw. deren n-dimensionale Analoge) verwendet werden. Grundsätzlich ist es egal, wie viele Dimensionen die Daten-Matrix aufweist. Auch ist es möglich, dass die Daten-Matrix abschnittsweise unterschiedliche Dimensionen aufweist, beispielsweise in Teilbereichen eine Dimension von n, in anderen Teilbereichen eine Dimension von n+1 oder dergleichen. Weiterhin kann auch die Dichte der einzelnen Punkte in den Daten-Matrizen variieren, sodass beispielsweise in einzelnen Teilbereichen eine höhere und/oder geringere Dichte an Messwerten vorhanden ist. Die Identifizierung der Zwischen-Hyperflächen kann insbesondere derart erfolgen, dass überprüft wird, ob zwischen den jeweils benachbarten Matrizenelementen ein "Sprung" über den jeweils (lokal) geltenden Grenzwert hinweg vorliegt. Beispielsweise kann also in einem Matrixelement ein Wert oberhalb des (lokal) geltenden Grenzwerts vorliegen, wohingegen im dazu benachbarten Matrixelement der Wert unterhalb des (lokal) geltenden Grenzwerts ist. Dementsprechend ist zwischen den beiden Matrixelementen eine Zwischen-Hyperfläche vorzusehen. Wenn zwischen zwei benachbarten Matrixelementen dagegen kein "Sprung" erfolgt, so wird grundsätzlich keine Zwischen-Hyperfläche angeordnet. Dementsprechend kann die Anzahl der Zwischen-Hyperflächen pro Matrixelement variieren. Insbesondere kann die Anzahl im 2D-Fall zwischen null und vier liegen, im 3D-Fall zwischen null und sechs liegen, im 4D-Fall zwischen null und acht liegen sowie im 5D-Fall zwischen null und zehn liegen (allgemein bei n Dimensionen zwischen 0 und 2n Zwischen-Hyperflächen). Die (geometrische) Lage der Zwischen-Hyperfläche ist dabei zumindest anfänglich noch unerheblich. Eine rechnerisch besonders vorteilhaft zu handhabende Anordnung ergibt sich in der Regel durch eine (anfänglich) mittige Anordnung der Zwischen-Hyperfläche zwischen den beiden jeweils benachbarten Matrixelementen. Bei der Grenz-Hyperfläche handelt es sich in der Regel um eine - mathematisch gesprochen - Mannigfaltigkeit der Co-Dimension 1. Dementsprechend handelt es sich im 2D-Fall in der Regel um eine Linie, im 3D-Fall um eine Fläche (beispielsweise Quadrat), im 4D-Fall um ein Volumen (beispielsweise Quader, Würfel und dergleichen), im 5D-Fall um ein Tesserakt usw. Anschließend werden die derart identifizierten Zwischen-Hyperflächen durch Zwischen-Hyperflächenbenachbarte Punkte repräsentiert. Unter "Zwischen-Hyperflächenbenachbart" kann grundsätzlich im Wesentlichen jede sinnvolle Art der Anordnung der betreffenden Punkte relativ zur jeweiligen Zwischen-Hyperfläche verstanden werden. Insbesondere können die jeweiligen Punkte im Wesentlichen auf (insbesondere mittig) einer Verbindungslinie zwischen den beiden benachbarten Matrizenelementen (insbesondere deren Zentren) liegen. Auch gewisse "seitliche" Variationen sind selbstverständlich denkbar, die vorzugsweise nicht größer ausfallen sollten, als dies der Erstreckung des jeweiligen Matrixelements entspricht. Anschließend werden die Zwischen-Hyperflächen-benachbarten Punkte durch jeweils zumindest eine geschlossene Kurve verbunden. Die Art der Linienführung ist (zunächst) grundsätzlich egal. Auch wenn eine direkte Verbindung besonders sinnvoll sein kann, kann es sich auch als vorteilhaft erweisen, wenn zumindest anfänglich eine Verbindung entlang der Begrenzungskanten (im 3D-Fall; in anderen Dimensionen gegebenenfalls die jeweils dazu gehörige geometrische Struktur) erfolgen. Anschließend kann (muss jedoch nicht notwendigerweise) noch eine Optimierung der jeweiligen Verbindungslinien erfolgen. Danach werden die durch die geschlossenen Kurven gebildeten Teil-Hyperflächen (die zu diesem Zeitpunkt bereits vorteilhafterweise optimiert sind) miteinander zu zumindest einer Grenz-Hyperfläche kombiniert. Je nach Art der vorliegenden Daten liegt dabei eine einzelne (geschlossene) Grenz-Hyperfläche bzw. eine Mehrzahl von (geschlossenen) Grenz-Hyperflächen vor. Wenn beispielsweise im 3D-Fall zwei voneinander separiert liegende Tumorbereiche vorhanden sind, ist es selbstverständlich sinnvoll, dass zwei voneinander unabhängige, in sich geschlossene Grenz-Hyperflächen errechnet werden. Voneinander "separate" Grenz-Hyperflächen können sich im Übrigen auch dann ergeben, wenn diese niedriger-dimensional miteinander in Kontakt stehen. Im 3D-Fall kann also beispielsweise von voneinander getrennten Grenz-Hyperflächen auch dann gesprochen werden, wenn sich diese in einem Punkt und/oder entlang einer Linie berühren. Dies ist auch für niedriger-dimensionale bzw. höher-dimensionale Räume in Analogie anwendbar. Ein großer Vorteil des vorgeschlagenen Verfahrens besteht darin, dass de facto keine Grundannahmen gemacht werden müssen. Insbesondere ist es nicht erforderlich einen Satz an Basis-Hyperflächenelementanordnungen (so genannte "Templates") zur Verfügung stellen zu müssen. Dementsprechend ist der Algorithmus besonders robust (in aller Regel entstehen ausschließlich vollständig geschlossene Oberflächen, die keine Löcher aufweisen) und kann darüber hinaus besonders einfach auf höhere Dimensionen, wie insbesondere auf den 4D-Fall, den 5D-Fall, den 6D-Fall und dergleichen verallgemeinert werden.

Bevorzugt ist es, wenn bei dem Verfahren die Zwischen-Hyperflächen-benachbarten Punkte zumindest teilweise und/oder zumindest zeitweise in zumindest einem Schritt, vorzugsweise in zumindest einem ersten Schritt, Zwischen-Hyperflächen-zentriert und/oder Zwischen-Hyperflächeneingeschlossen angeordnet sind. Ein derartiges Verfahren erweist sich in der Regel als besonders einfach zu implementieren und darüber hinaus als in aller Regel vergleichsweise schnell. Da darüber hinaus zu einem späteren Schritt eine Optimierung der Zwischen-Hyperflächen-benachbarten Punkte, der diese Punkte verbindenden Kurven, der hierdurch entstehenden Teil-Hyperflächen und/oder der entstehenden Grenz-Hyperflächen (gegebenenfalls auch anderweitiger Elemente) optimiert werden können, muss hierdurch keine Verschlechterung des Endergebnisses eintreten. Unter einer Zwischen-Hyperflächen-zentrierten Anordnung kann dabei eine Anordnung längs einer Verbindungslinie der Zentren der hierzu korrespondierenden, zueinander benachbarten Matrizenelemente zu verstehen sein, bzw. eine benachbart hierzu liegende Anordnung. Unter einer Zwischen-Hyperflächeneingeschlossenen Anordnung kann insbesondere eine Anordnung des jeweiligen Punkts auf bzw. benachbart zu einer Zwischen-Hyperfläche (also zum Beispiel in drei Dimensionen eine Fläche und in vier Dimensionen ein Volumen) werden.

Vorteilhaft ist es weiterhin, wenn bei dem Verfahren zumindest eine geschlossene Kurve und/oder zumindest eine Teil-Hyperfläche zumindest zeitweise und/oder zumindest teilweise optimiert, insbesondere verkleinert, besonders bevorzugt lokal minimiert wird. Mit einer derartigen Optimierung kann durch vergleichsweise einfache und/oder wenig rechenintensive Algorithmen eine in aller Regel spürbare Verbesserung der schlussendlich entstehenden Grenz-Hyperfläche(n) realisiert werden. Das vorgeschlagene Verfahren erzeugt somit in der Regel spürbar bessere Ergebnisse.

Eine weitere vorteilhafte Ausführungsform des vorgeschlagenen Verfahrens ergibt sich, wenn zumindest ein Zwischen-Hyperflächen-benachbarter Punkt und/oder zumindest Teile zumindest einer Zwischen-Hyperflächenbenachbarte Punkte verbindenden Kurven und/oder zumindest eine Teil-Hyperfläche und/oder zumindest ein Teil zumindest einer Grenz-Hyperfläche in Abhängigkeit von den Datenwerten der benachbarten Daten-MatrizenElemente gelegt und/oder verschoben werden. Mithilfe einer derartigen Ausbildung des Verfahrens kann die Lage der Grenz-Hyperfläche in der Regel nochmals deutlich genauer ermittelt werden. Wenn rein beispielhaft bei einem ersten Messwert von 51% und einem zweiten Messwert von 20% sowie einem Grenzwert von 50% (sodass sich eine 50%-Grenz-Hyperfläche ergibt) die schlussendliche Grenz-Hyperfläche genau in die Mitte zwischen den beiden zueinander benachbarten Matrizenelementen gelegt wird, so bedeutet dies in aller Regel eine Verschlechterung gegenüber einem Fall, bei dem sich die Grenz-Hyperfläche in der Nähe zum Zentrumspunkt des Matrizenelements mit dem 51% Messwert befindet. Um die Verschiebung quantitativ erfolgen zu lassen, bieten sich im Wesentlichen alle bekannten Interpolationsverfahren an (wobei unter Umständen auch auf weitere Datenwerte von in der Nähe befindlichen Matrizenelementen zurückgegriffen werden kann), wie beispielsweise lineare Interpolation, quadratische Interpolation, kubische Interpolation, Spline-Interpolation und dergleichen.

Weiterhin wird vorgeschlagen, das Verfahren derart durchzuführen, dass zumindest eine geschlossene Kurve, vorzugsweise eine Mehrzahl von geschlossenen Kurven, insbesondere zumindest im Wesentlichen alle geschlossenen Kurven zumindest zeitweise und/oder zumindest teilweise richtungsorientiert sind und/oder durch vektorartige Begrenzungen begrenzt sind. Mithilfe einer derartigen Richtungsorientierung ist es einerseits einfacher, Teil-Hyperflächen zu Grenz-Hyperflächen zusammenzusetzen. Darüber hinaus kann anhand der Richtungsorientierung auf einen (bezüglich der vollständigen Grenz-Hyperfläche) innen liegenden und außen liegenden Bereich geschlossen werden. Ein innen liegender Bereich kann dabei ein Bereich sein, wo die Datenwerte oberhalb des Grenzwerts liegen, wobei dementsprechend im außen liegenden Bereich die Datenwerte unterhalb des Grenzwerts liegen (oder umgekehrt). Eine Richtungsorientierung kann dabei durchaus auch in mehreren Richtungen vorgesehen werden. So ist es beispielsweise möglich, dass eine Verbindungslinie in Form eines Paares von jeweils zueinander antiparallelen Vektoren "richtungsorientiert" wird. Auch ist es möglich, dass die Richtungsorientierung (insbesondere die genaue Art und Ausführung der Richtungsorientierung) vom jeweiligen Verfahrensschritt abhängt und sich über das Verfahren hinweg (gegebenenfalls auch mehrfach) ändert.

Eine weitere vorteilhafte Weiterbildung des Verfahrens ergibt sich, wenn der Grenzwert, der die zumindest zeitweise und/oder zumindest teilweise Anordnung zumindest eines Teils zumindest einer Grenz-Hyperfläche bestimmt zumindest zeitweise und/oder zumindest bereichsweise veränderlich, insbesondere benutzervariabel ist und/oder die Behandlung von zumindest Teilen zumindest zweier zueinander benachbarter Grenz-Hyperflächen zumindest zeitweise und/oder zumindest bereichsweise veränderlich, insbesondere benutzervariabel ist. Mit einer derartigen Weiterbildung wird das vorgeschlagene Verfahren besonders universell einsetzbar. Die Höhe eines zumindest in Teilbereichen und/oder zumindest in bestimmten Zeitintervallen zu wählenden Grenzwerts kann so beispielsweise durch den Benutzer des Verfahrens flexibel angepasst werden. In diesem Fall ist es beispielsweise möglich, durch eine entsprechende Datenwertwahl einen Tumor "rechnerisch besser heraus zu präparieren". Die Benutzervariabilität kann dabei entweder direkt erfolgen (beispielsweise durch Eingabe eines dezidierten Zahlenwerts) oder für den Benutzer transparent, indem er beispielsweise auswählt "Anzeige von Knochen", "Anzeige von Tumoren" und dergleichen. Unter der Art der Behandlung benachbarter Grenz-Hyperflächen ist insbesondere zu verstehen, ob beispielsweise sich lediglich in einem Punkt bzw. einer Geraden (und gegebenenfalls höher-dimensionaler Körper je nach vorliegend zu behandelnder Dimension der Matrix) berührende Körper als miteinander verbundene Körper bzw. voneinander getrennte Körper aufzufassen sind. Dementsprechend werden dann zwei voneinander separierte Grenz-Hyperflächen gebildet bzw. eine einzelne, einen "dünnen Verbindungshals" bildende Grenz-Hyperfläche gebildet. Die soeben genannten Zahlen von einer bzw. zwei Grenz-Hyperflächen sind selbstverständlich lediglich exemplarisch aufzufassen.

Weiter wird vorgeschlagen, dass das Verfahren zumindest einen Verfahrensschritt aufweist, bei dem zumindest zeitweise und/oder zumindest bereichsweise zumindest eine zusätzliche Stützstruktur bei zumindest einer Grenz-Hyperfläche eingefügt werden kann. Dies kann beispielsweise dann erfolgen, wenn bei der "fast fertigen" Grenz-Hyperfläche gewisse Verbindungsknoten auftreten, die "unphysikalisch", "unmedizinisch" oder dergleichen sind. Diese können dann anschließend durch die Einfügung zusätzlicher Stützstrukturen (wie beispielsweise von zusätzlichen Linien und dergleichen) physikalisch bzw. medizinisch "sinnvoll" verfeinert werden. Auch ist es möglich, dass durch Einführung derartiger Stützstrukturen beispielsweise eine teilweise und/oder gegebenenfalls (im Wesentlichen) vollständige Reduktion auf bestimmte geometrische Grundstrukturen erfolgt. Beispielsweise kann es sich als sinnvoll erweisen, wenn eine (teilweise und/oder im Wesentlichen vollständige und/oder vollständige) Reduktion auf Dreiecke und/oder Tetraeder (und/oder entsprechender höherdimensionaler Körper) erfolgt, da derartige Strukturen beispielsweise von Grafikkarten elektronischer Computer besonders gut behandelt werden können, und sich aus diesem Grund Rechenzeitgewinne ergeben können.

Besonders sinnvoll ist es darüber hinaus, wenn bei dem Verfahren zumindest zeitweise zumindest ein Glättungsschritt für zumindest einen Teil zumindest einer Grenz-Hyperfläche durchgeführt wird. Hierdurch können "unphysikalische" bzw. "unmedizinische" (und dergleichen) Ecken und Kanten vermieden werden und eine geglättete Grenz-Hyperfläche dargestellt werden. Hierdurch kann das Ergebnis des Verfahrens nochmals zum Teil deutlich verbessert werden.

Weiterhin wird vorgeschlagen, dass das Verfahren mit einer Daten-Matrix durchgeführt wird, die zumindest zeitweise und/oder zumindest teilweise zumindest dreidimensional, zumindest vierdimensional, zumindest fünfdimensional, zumindest sechsdimensional, zumindest siebendimensional und/oder höher-dimensional ist. Die genannten Werte können dabei als diskrete Einzelwerte, als untere Grenzwerte und/oder als obere Grenzwerte aufgefasst werden. Rein beispielhaft ist also ein "rein vierdimensionales" Verfahren bzw. ein vier- bis sechsdimensionales Verfahren als explizit offenbart anzusehen. Weitere "offenbarte Dimensionen" sind darüber hinaus 8, 9, 10, 11, 12, 13, 14, 15, 16, 17, 18, 19 und 20. Insbesondere vierdimensionale Daten-Matrizen sind für viele Anwendungen überaus sinnvoll, da damit beispielsweise dreidimensionale Räume, die zeitveränderlich sind, gut modelliert werden können. Auch höher-dimensionale Werte können sich insbesondere bei ingenieurswissenschaftlichen, messtechnischen und sonstigen technischen Anwendungen sowie bei (Grundlagen-)Forschungsarbeiten als überaus wertvoll erweisen. Als Beispiel unter vielen seien in diesem Zusammenhang relativistisch-hydrodynamische Simulationsrechnungen von Ausfrier-Hyperflächen für die Vielteilchenproduktion aus Feuerbällen in Schwerionenkollisionen zu nennen. Ein weiteres, besonders viel versprechendes Anwendungsgebiet, insbesondere für vierdimensionale Verfahren, ist darüber hinaus die Trickfilmindustrie, bei der zeitveränderliche Figuren bei dreidimensionalen Trickfilmen gerechnet werden können.

Besonders sinnvoll ist es, wenn bei dem Verfahren eine der Dimensionen der Daten-Matrix die Zeit ist. In diesem Fall kann besonders gut ein zeitveränderliches Objekt eingehender untersucht werden und darüber hinaus können auf besonders einfache Weise Zwischenschritte (insbesondere durch Interpolationsverfahren) und Ausblicke (insbesondere durch Extrapolationsverfahren) errechnet werden.

Besonders vorteilhaft ist es, wenn bei dem Verfahren die Daten der Daten-Matrix Messwerte darstellen, insbesondere Bildwerte und/oder physikalische Messwerte, besonders bevorzugt medizinische Messwerte. In einem solchen Fall kann sich eine besonders hohe Relevanz des vorgeschlagenen Verfahrens für die Praxis ergeben.

Weiterhin wird eine Vorrichtung, insbesondere eine Computervorrichtung vorgeschlagen, welche derart ausgebildet und eingerichtet ist, dass sie zumindest zeitweise und/oder zumindest teilweise ein Verfahren der vorab beschriebenen Art durchführt. Insbesondere kann die Vorrichtung zur Bestimmung von Grenz-Hyperflächen aus Daten-Matrizen genutzt werden. Eine derartige Vorrichtung kann die bereits vorab beschriebenen Vorteile und Eigenschaften zumindest in analoger Weise aufweisen. Darüber hinaus kann die Vorrichtung im Sinne der vorherigen Beschreibung (zumindest in Analogie) weitergebildet werden.

Im Folgenden wird die Erfindung anhand vorteilhafter Ausführungsbeispiele und unter Bezugnahme auf die beigefügte Zeichnung näher erläutert. Es zeigen:
- Fig. 1:: ein Ausführungsbeispiel für die Konstruktion von Grenzlinien in einem zweidimensionalen Fall;
- Fig. 2:: ein Ausführungsbeispiel für die Konstruktion einer Grenzfläche in einem dreidimensionalen Fall;
- Fig. 3:: Beispiele für verschiedenartige initiale Kontaktflächen für unterschiedliche Voxel-Datenwertanordnungen in einem dreidimensionalen Fall;
- Fig. 4:: Beispiele für mögliche Behandlungsweisen von sich lediglich entlang einer Linie berührenden Volumenbereichen in einem dreidimensionalen Fall;
- Fig. 5:: die in Fig. 3 dargestellten Grenzflächen in einer möglichen optimierten Form;
- Fig. 6:: die in Fig. 5 dargestellten Grenzflächen, wobei diese auf Dreiecke zurückgeführt sind;
- Fig. 7:: unterschiedliche Koordinatensysteme für zweidimensionale, dreidimensionale und vierdimensionale Fälle;
- Fig. 8:: die Konstruktion von Stützpunkten und Verbindungspunkten gemäß einem Ausführungsbeispiel eines Algorithmus für unterschiedlich-dimensionale Fälle;
- Fig. 9:: die Konstruktion von Verbindungslinien zwischen Verbindungspunkten gemäß einem bevorzugten Ausführungsbeispiel eines Algorithmus für unterschiedlich-dimensionale Fälle;
- Fig. 10:: die innerhalb einer 2*2*2*2 Toxel-Nachbarschafts-Umgebung verwendete Notation für die unterschiedlichen Toxel, Stützpunkte und Verbindungspunkte gemäß einem vierdimensionalen Ausführungsbeispiel;
- Fig. 11:: eine Veranschaulichung der Grenzvolumen eines einzelnen Toxels innerhalb einer 2*2*2*2 Toxel-Nachbarschafts-Umgebung gemäß einem Ausführüngsbeispiel;
- Fig. 12:: die für das in Fig. 11 dargestellte Beispiel verwendeten Doppelvektoren gemäß einem Ausführungsbeispiel des Algorithmus in einer vierdimensionalen Beispielumgebung;
- Fig. 13:: Ausführungsbeispiele für erzeugte Grenz-Hyperflächen in unterschiedlich-dimensionalen Systemen;
- Fig. 14:: ein Ausführungsbeispiel für mögliche Behandlungsweisen von gleichartigen vierdimensionalen Gebieten, die sich lediglich entlang einer Fläche berühren;
- Fig. 15:: ein Beispiel für die Anwendung des Verfahrens auf fünfdimensionale Daten;
- Fig. 16:: ein mögliches Verfahren zur Extraktion von Hyperflächen in Form eines Ablaufdiagramms.

Zur Erläuterung des vorgeschlagenen Algorithmus soll zunächst der einfachste Fall geschildert werden, nämlich die Anwendung des Verfahrens auf Messwerte, die in Form einer zweidimensionalen Matrix vorliegen. Beispielsweise kann es sich um einen zweidimensionalen Computertomographie-Schnitt durch ein Gewebe bzw. durch den Körper eines Patienten handeln.

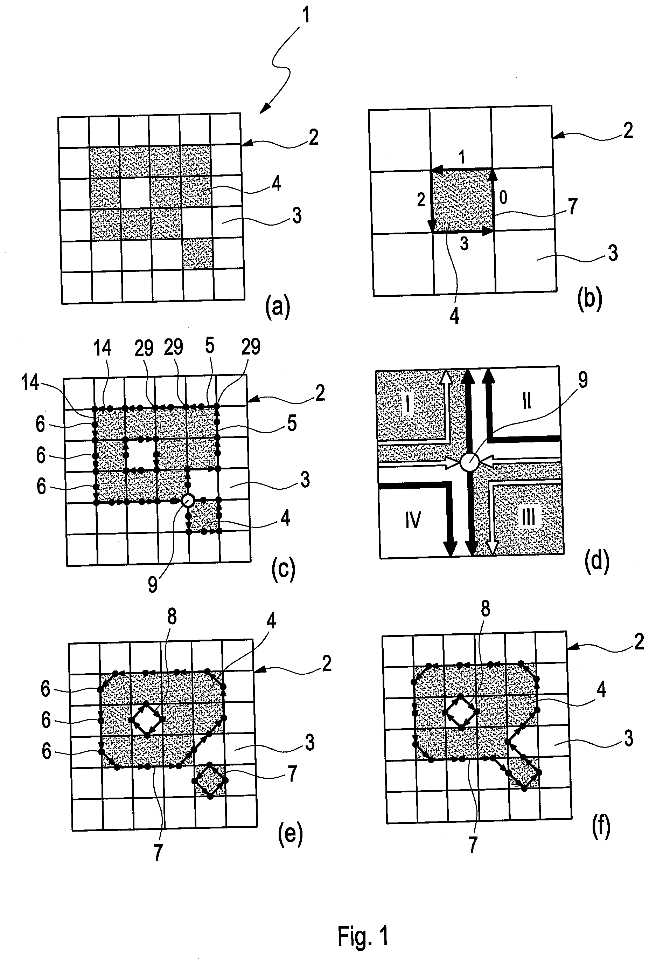

Der Algorithmus wird dabei unter Bezugnahme auf die unterschiedlichen Abbildungen der Fig. 1 näher erläutert. Um die Erläuterung darüber hinaus auf das Wesentliche zu beschränken, werden lediglich zwei unterschiedliche Datenwerte verwendet, nämlich "dunkel" und "hell". Ein Beispiel für einen derartigen Datensatz ist in Fig. 1 a dargestellt. Zu erkennen ist das 2D-Raster 2 des Bildes 1, in dem die unterschiedlichen Bildpunkte 3, 4, nämlich die hellen Bildpunkte 3 sowie die dunklen Bildpunkte 4, dargestellt sind.

Zunächst werden, in einem ersten Verfahrensschritt auf dem gesamten 2D-Raster 2 alle "Übergangspaare" bestimmt, bei denen also an der Verbindungslinie (vorliegend nicht eingezeichnet) der beiden benachbarten Bildpunkte 3, 4 ein Kontrastübergang vorliegt (Übergang von einem hellen Bildpunkt 3 zu einem dunklen Bildpunkt 4 oder umgekehrt). An derartigen Kontraststellen wird dementsprechend jeweils eine Zwischen-Hyperfläche 5 vorgesehen. Dies ist in Fig. 1c dargestellt. Im vorliegend dargestellten Beispiel liegen die Zwischen-Hyperflächen 5 genau auf den Rasterlinien des 2D-Rasters 2. Eine derartige Lage ist zwar vorteilhaft, nicht jedoch zwingend von Nöten.

Algorithmisch kann ein Erfassen sämtlicher "Übergangspaare" beispielsweise durch "sukzessives Ablaufen" sämtlicher Bildpunkte 3, 4 erreicht werden. Dazu werden die Bildpunkte 3, 4 beispielsweise zeilenweise nacheinander "angesteuert", wobei für jeden Bildpunkt 3, 4 in einer dazu korrespondierenden 2*2-Bildpunkt-Nachbarschaftsumgebung das Vorhandensein von "Übergangspaaren" geprüft wird. Ausgehend von einem bestimmten Bildpunkt 3, 4 ist eine 2*2-Bildpunkt-Nachbarschaftsumgebung beispielsweise durch den "Ausgangsbildpunkt", seinen rechten Nachbarn, seinen oberen Nachbarn sowie seinen rechts-oben-liegenden Nachbarn definiert. Da für den weiteren Verlauf des Verfahrens üblicherweise nur "unmittelbare Übergangpaare" (und keine "diagonalen Übergangpaare") verwendet werden, kann es auch ausreichend sein, wenn zu jedem einzelnen Bildpunkt 3, 4 lediglich das Vorhandensein eines Kontrastübergangs zu seinem jeweils rechten und oberen Bildpunkt-Nachbarn 3, 4 überprüft wird. Durch die vorgeschlagenen Verfahrensweisen kann die Anzahl der zu überprüfenden Bildpunktkombinationen deutlich reduziert werden, was Rechenzeit einsparen helfen kann.

In einem zweiten Verfahrensschritt werden nunmehr zu den einzelnen Zwischen-Hyperflächen 5 die dazu korrespondierenden Stützpunkte 6 ermittelt (siehe Figs. 1c und 1e). Im vorliegend dargestellten Ausführungsbeispiel sind die Stützpunkte 6 jeweils in der Mitte der Gitterkanten des 2D-Rasters 2 bzw. in der Mitte der jeweiligen Zwischen-Hyperflächen 5 angeordnet. Diese Lage entspricht einer Anordnung in der Mitte der Verbindungslinie zwischen jeweils zwei Matrixelement-Zentren jeweils benachbart zueinander liegender Matrixelemente (also Bildpunkte 3, 4; vorbei Stützpunkte 6 nur zwischen Matrixelementen mit Kontrastübergang auftreten). Die derart ermittelten Stützpunkte 6 werden nunmehr jeweils zu geschlossenen Hilfskurven 14 verbunden. Die Hilfskurven 14 werden über die Verbindungspunkte 29 geführt, an denen sich die einzelnen Zwischen-Hyperflächen 5 berühren. Die geschlossenen Hilfskurven 14 entsprechen im vorliegend dargestellten Fall einer Aneinanderreihung der Zwischen-Hyperflächen 5. Wie weiter unten noch eingehender ausgeführt werden wird, erhält man beim in Fig. 1c dargestellten Beispiel je nach gewähltem Modus insgesamt drei geschlossene Hilfskurven 14 (im "Trennungsmodus"; Fig. 1e), bzw. lediglich zwei geschlossene Hilfskurven 14 (im "Verbindungsmodus"; Fig. 1f).

Wie man weiterhin in Fig. 1c erkennen kann, sind die geschlossenen Hilfskurven 14 jeweils mit einer Richtungsorientierung versehen. Aus der Orientierung der Hilfskurven 14 kann dabei ermittelt werden, ob die innerhalb der Hilfskurve 14 liegenden Bildpunkte 3, 4 dunkle Bildpunkte 4 oder helle Bildpunkte 3 sind. Im vorliegend dargestellten Ausführungsbeispiel ist die Richtungskonvention so gewählt (siehe auch Fig. 1b), dass eine entgegen dem Uhrzeigersinn verlaufende geschlossene Hilfskurve 14 in ihrem Inneren dunkle Bildpunkte 4 einschließt (dementsprechend liegen außerhalb der entgegen dem Uhrzeigersinn verlaufenden Hilfskurve 14 helle Bildpunkte 3). Ist die geschlossene Hilfskurve 14 dagegen im Uhrzeigersinn gerichtet, so bedeutet dies, dass im Inneren der im Uhrzeigersinn verlaufenden, geschlossenen Hilfskurve 14 helle Bildpunkte 3 angeordnet sind (und dementsprechend außerhalb der im Uhrzeigersinn verlaufenden geschlossenen Hilfskurve 14 dunkle Bildpunkte 4 zu finden sind). Es wird darauf hingewiesen, dass die Richtungskonvention willkürlich gewählt ist und durchaus auch anders gewählt werden kann.

Weiterhin ist es auch möglich, dass innerhalb einer Hilfskurve 14 durchaus weitere Hilfskurven 14 eingeschlossen sein können. Dementsprechend ist es möglich, dass innerhalb einer entgegen dem Uhrzeigersinn verlaufenden geschlossenen Hilfskurve 14 im "Nahbereich" zur Hilfskurve 14 dunkle Bildpunkte 4 liegen, wobei in einer weiteren, innerhalb der "äußeren" geschlossenen Hilfskurve 14 liegenden "inneren" Hilfskurve 14 mit einer im Uhrzeigersinn verlaufenden Richtung erneut helle Bildpunkte 3 liegen. Diese "Unterstrukturen" können auch mehrfach geschachtelt vorliegen. Ein einfaches Beispiel für derartige "Unterstrukturen" ist in Fig. 1 (insbesondere Fig. 1c) dargestellt.

Die Hilfskurven 14 werden anschließend optimiert, indem die Stützpunkte 6 (gegebenenfalls nach Lagekorrektur) direkt miteinander verbunden werden, also die Verbindungspunkte 29 wegfallen. Dies führt zu einer Längenminimierung der Hilfskurven 14 (jeweils lokales Minimum), so dass sich schlussendlich die in Fig. 1e dargestellten geschlossenen Kurven 7, 8 ergeben. Die geschlossenen Kurven 7 sind entgegen dem Uhrzeigersinn gerichtet, enthalten in ihrem Inneren also dunkle Bildpunkte 4. Dementsprechend sind die geschlossenen Kurven 8 im Uhrzeigersinn gerichtet, enthalten also in ihrem Inneren helle Bildpunkte 3.

Ein Spezialfall ergibt sich noch, wenn zwei Bildpunktmengen (im in Fig. 1 c dargestellten Ausführungsbeispiel zwei Mengen aus jeweils dunklen Bildpunkten 4) sich in lediglich einem einzelnen Kontaktpunkt 9 berühren. Hier kann es sowohl sinnvoll sein, dass die jeweiligen Bildpunktmengen 4 als getrennte Mengen aufzufassen sind (so dass sich schlussendlich die in Fig. 1 e dargestellten, insgesamt drei geschlossenen Kurven 7, 8 ergeben). Ebenso kann es jedoch auch sinnvoll sein, dass die sich in einem einzelnen Kontaktpunkt 9 berührenden Bildpunktmengen als zusammengehörig angesehen werden sollen, sodass sich schlussendlich die in Fig. 1f gezeigte Situation ergibt, bei der lediglich zwei geschlossene Kurven 7, 8 durch den Algorithmus erzeugt werden. Vorteilhaft ist es, wenn - wie vorliegend erläutert - die Wahl, ob derartige Bildpunktmengen als miteinander zusammenhängend bzw. als voneinander getrennt angesehen werden sollen, dem Benutzer überlassen bleibt. Dieser kann beispielsweise vor der Konstruktion der geschlossenen Kurven 7, 8 definieren (beispielsweise durch Wahl einer entsprechenden Schaltfläche auf einem Computerbildschirm), wie in einem derartigen Fall gehandelt werden soll.

Die Identifizierung derartiger Kontaktpunkte 9 sowie deren Behandlung erfolgt durch die in Fig. 1d näher dargestellte Logik. Dazu werden vorzugsweise bereits die anfänglichen Hilfskurven 14 (entsprechen den miteinander verbundenen Zwischen-Hyperflächen 5) mit einer Richtungsorientierung versehen (gleiche Konvention wie die Richtungsorientierung der geschlossenen Kurven 7, 8; siehe Fig. 1b, 1c, 1e, 1f). Wenn man der Abfolge der Hilfskurven 14 bzw. der gerichteten Zwischen-Hyperflächen 5 folgt, so stößt man an einem Kontaktpunkt 9 auf eine Hilfskurve 14 bzw. eine Zwischen-Hyperfläche 5 mit entgegengesetzter Richtung (siehe Fig. 1d). Ist nun die Vorgabe derart, dass sich in einem einzelnen Kontaktpunkt 9 berührendePunktmengen miteinander verbunden werden sollen (Fig. 1f), so wird im Quadranten IV "nach rechts" abgebogen. Sollen die Punktmengen dagegen voneinander getrennt werden, so wird im Quadranten I "nach links" abgebogen. Entsprechendes gilt, wenn man aus Richtung des Quadranten II/III kommt.

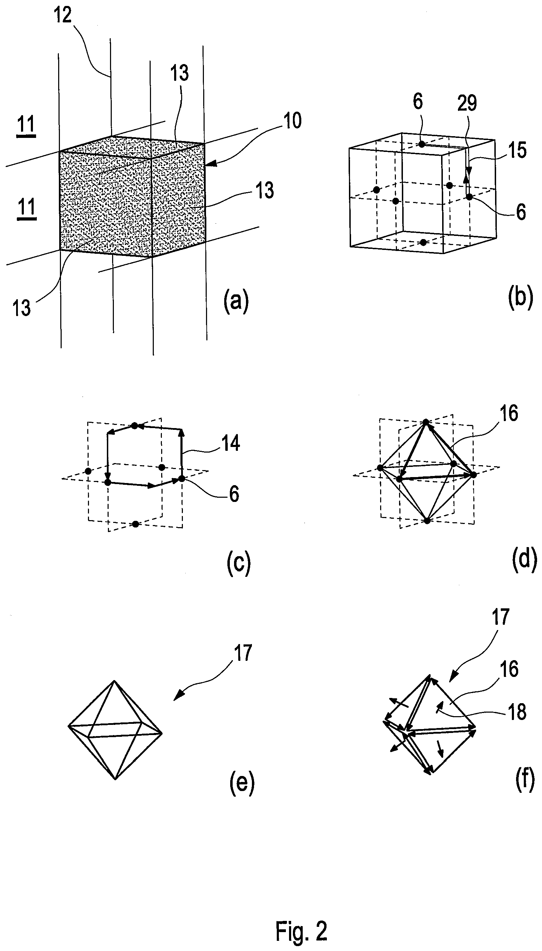

Unter Bezugnahme auf die Fig. 2 bis 6 wird nun die Anwendung des vorgeschlagenen Verfahrens beim Vorliegen dreidimensionaler Daten erläutert.

In Fig. 2 ist der Einfachheit halber ein einzelnes 3D-Volumenelement 10 (ein so genanntes Voxel) dargestellt, das in einem nur andeutungsweise eingezeichneten 3D-Gitter 12 eingebettet ist. Bei dem vorliegend würfelförmig ausgebildeten Voxel 10 handelt es sich um ein dunkles Voxel 10, welches von ausschließlich hellen Voxeln 11 umgeben ist. Das dunkle Voxel 10 kontaktiert somit an insgesamt sechs Flächen 13 jeweils ein benachbartes (helles) Voxel 11. Die Ausgangsverhältnisse sind in Fig. 2a dargestellt. Da es sich um ein einzelnes dunkles Voxel 10 inmitten von ansonsten ausschließlich hellen Voxeln 11 handelt, muss dieses nach Durchlaufen des Algorithmus vollständig von einer Grenz-Hyperfläche 17 umschlossen sein (vergleiche Fig. 2f).

Da zwischen dem dargestellten dunklen Voxel 10 und den es umgebenden hellen Voxeln 11 jeweils ein Kontrast (von dunkel nach hell) besteht, ist zwischen dem dunklen Voxel 10 und sämtlichen umgebenden sechs hellen Voxeln 11 jeweils eine Zwischen-Hyperfläche 13 anzuordnen. Diese ist im vorliegenden Fall identisch mit den Flächen 13 des würfelförmigen Voxels 10 bzw. den Flächen 13 des 3D-Gitters 12.

Die Identifizierung der Kontrastübergänge kann dabei - ähnlich wie bereits vorab im Zusammenhang mit dem 2-D-Fall erläutert - durch sukzessives Abschreiten sämtlicher Voxel 10 der Datenmatrix erfolgen, wobei jeweils in einer 2*2*2-Nachbarschaftsumgebung nach dem Vorhandensein von Kontrastübergängen gesucht wird.

In einem weiteren Schritt wird nun jeder der Flächen 13 ein im vorliegend dargestellten Ausführungsbeispiel jeweils zentral angeordneter Stützpunkt 6 zugeordnet. Diese Stützpunkte 6 wiederum werden durch eine Mehrzahl von jeweils in sich geschlossenen Hilfskurven 14 miteinander verbunden. Von diesen im vorliegend dargestellten Ausführungsbeispiel insgesamt acht in sich geschlossenen Hilfskurven 14 (jeweils dem würfelförmigen Voxel 10 "zugeordnet") ist aus Übersichtlichkeitsgründen in Fig. 2c lediglich eine Hilfskurve 14 eingezeichnet (die sonstigen Hilfskurven 14 "umrahmen" die verbleibenden Ecken des Voxels 10). Wie man Fig. 2c entnehmen kann, ist die Hilfskurve 14 richtungsorientiert gewählt, wobei die bereits im 2D-Fall verwendeten Richtungskonvention zur Anwendung kommt. Die Richtung steht dafür, dass sich das dunkle Voxel 10 innen und die hellen Voxel 11 außen befinden. Die Erzeugung der geschlossenen Hilfskurven 14 kann programmtechnisch besonders einfach dadurch erfolgen, dass man die Stützpunkte 6 jeweils durch eine Verbindungslinie 15 miteinander verbindet (siehe Fig. 2b, wo aus Übersichtlichkeitsgründen lediglich eine einzelne Verbindungslinie 15 näher ausgeführt ist) und diese Verbindungslinie 15 als zueinander antiparallele Vektoren ("Doppelvektor") darstellt (die sonstigen Verbindungslinien 15 verlaufen über die verbleibenden Seitenkanten des Voxels 10). Eine in sich geschlossene Hilfskurve 14 ergibt sich dann durch Hintereinanderreihung von gleichgerichteten Richtungsvektoren.

In einem weiteren Schritt werden nun die Hilfskurven 14 vereinfacht, indem die Zwischenpunkte auf den Seitenkanten des Voxels 10 aus dem Kurvenverlauf entfernt werden. Dadurch ergibt sich das in Fig. 2d sichtbare Dreieck 16. Das Dreieck 16 stellt eine lokale Minimalfläche her, ist also bezüglich seiner Oberfläche sowie seines Umfangs lokal minimiert. Da nicht nur die in Fig. 2 rechts vorne und oben befindlichen Bereiche des Voxels 10 vom Algorithmus bearbeitet werden, ergeben sich neben dem in Fig. 2d fett eingezeichneten Dreieck 16 sieben weitere Dreiecke, die zusammen ein Oktaeder 17 bilden (bzw. eine Oktaederoberfläche bilden, die ein Oktaeder 17 einschließen). Das Oktaeder 17 ist in Fig. 2e in Form eines Gitterlinienmodells dargestellt. In Fig. 2f ist zusätzlich zum reinen Gittermodell das Oktaeder 17 noch mitsamt der in Fig. 2c ersichtlichen Richtungsorientierung der Hilfskurven 14 (die auch für die Dreiecke 16 beibehalten wird) dargestellt. Basierend auf der Umlaufrichtung der einzelnen Dreiecke 16 können für jedes Dreieck 16 Normalenvektoren 18, also richtungsorientierte Flächensenkrechte (Flächennormale), definiert werden. Aus diesen ergibt sich das "Innen" und "Außen" der Grenz-Hyperfläche, vorliegend also des Oktaeders 17.

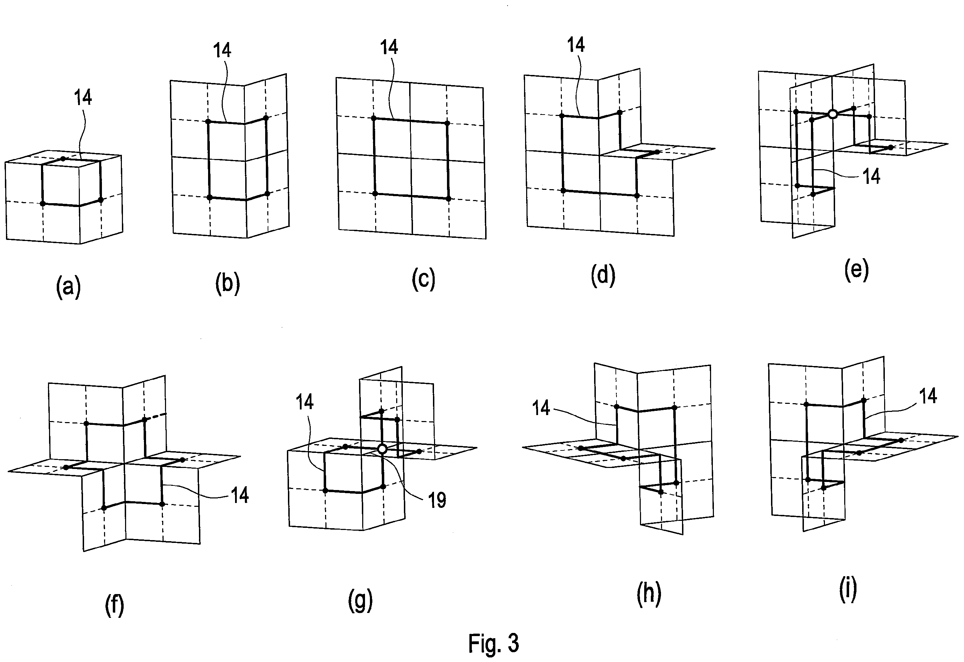

In der Regel sind von dem vorgeschlagenen Algorithmus natürlich komplexere Datenanordnungen als die in Fig. 2 dargestellte Anordnung zu bearbeiten. In Fig. 3 sind rein beispielhaft für einige Anordnungen von dunklen Voxeln 10 und hellen Voxeln 11 die zu Fig. 2c korrespondierenden Zwischenergebnisse dargestellt (wobei in Fig. 3 lediglich die Grenzflächen, an denen ein Kontrastübergang vorhanden ist, dargestellt sind). Für manche der dargestellten Topologien ergeben sich dabei Konstellationen ähnlich zum einzelnen Kontaktpunkt 9 in Fig. 1c. Dies ist in den Fig. 3e, 3g der Fall. Da es sich nunmehr um ein um eine Dimension erhöhtes Problem handelt, ist es sinnvoll, die Möglichkeit einer Verbindung bzw. Trennung von einander kontaktierenden Mengen von hellen Voxeln 11 bzw. dunklen Voxeln 10 nicht bereits dann (optional) vorzusehen, wenn sich diese Mengen lediglich in einem einzelnen Punkt kontaktieren, sondern erst dann, wenn sich zwei gleichartige Mengen entlang einer Linie kontaktieren. Letzteres ist in Fig. 3e der Fall, wo links vorne eine "Säule" aus zwei übereinanderliegenden dunklen Voxeln 10 und rechts hinten oben ein einzelnes dunkles Voxel 10 vorhanden sind. Die "dunkle Säule" und das einzelne dunkle Voxel 10 kontaktieren entlang einer Kontaktlinie 19, was durch eine Kreislinie im Mittelpunkt der Kontaktlinie 19 dargestellt ist (die Kreislinie soll eine mögliche alternative Bearbeitung in einem "Trennungsmodus" bzw. in einem "Verbindungsmodus" symbolisieren). Eine gleichartige Situation ergibt sich in Fig. 3g, wo zwei dunkle Voxel 10 längs einer "Diagonalen" angeordnet sind, sodass sich auch hier eine Kontaktlinie 19 ergibt. Lediglich der Vollständigkeit halber wird darauf hingewiesen, dass Fig. 3 nur einzelne exemplarische Anordnungen von dunklen 10 bzw. hellen Voxeln 11 zeigt.

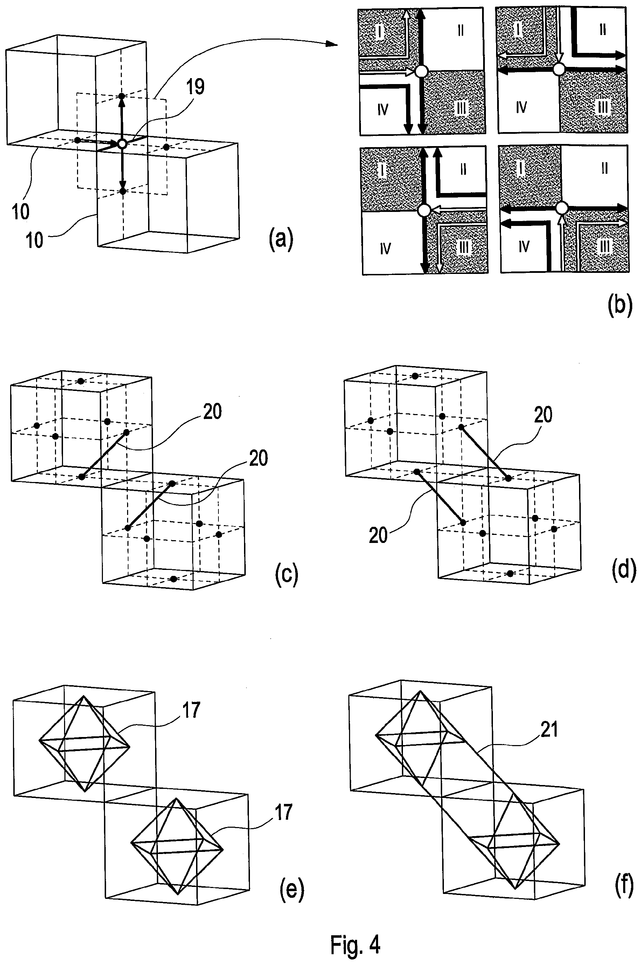

In Fig. 4 ist näher ausgeführt, wie der Algorithmus die resultierende Grenz-Hyperfläche bei Vorhandensein einer Kontaktlinie 19 erzeugt. Gemäß dem vorliegend vorgeschlagenen Verfahren erfolgt die Trennung bzw. Verbindung (beispielsweise in Abhängigkeit von einer Benutzervorgabe) der beiden Mengen von dunklen Voxeln 10 (in Fig. 4a links oben und rechts unten) während des Reduktionsschritts bei der Vereinfachung der Hilfskurven 14 (siehe Übergang Fig. 2c auf Fig. 2d). Die "Logik" derer sich der Algorithmus bedient ist insbesondere in Fig. 4b dargestellt. Fig. 4b zeigt die Behandlung der unterschiedlichen Richtungsvektoren (insgesamt vier Darstellungen) gemäß der in Fig. 4a dargestellten Situation. Je nachdem ob der "Verbindungsmodus" gewählt ist bzw. der "Trennungsmodus" gewählt ist, wird entweder dem abknickenden weißen Pfeil (entspricht dem "Trennungsmodus") bzw. dem abknickenden schwarzen Pfeil (entspricht dem "Verbindungsmodus") gefolgt. Dementsprechend ergeben sich im "Trennungsmodus" die in Fig. 4c gezeigten Begrenzungslinien 20 sowie die beiden voneinander getrennten Oktaeder 17 (bzw. Oktaederoberflächen Fig. 4e) bzw. die in Fig. 4d dargestellten Begrenzungslinien 20 und somit schlussendlich das in Fig. 4f dargestellte Gesamtvolumen 21 (bzw. die Oberfläche des in Fig. 4f dargestellten Körpers).

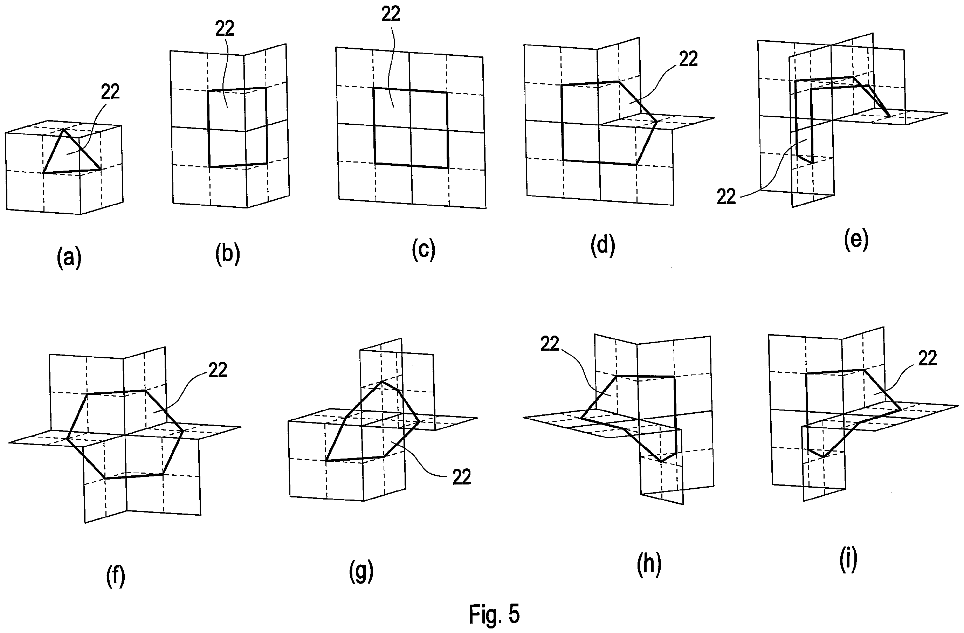

In Fig. 5 sind schließlich die in Fig. 3 dargestellten Topologien in einer weiter bearbeiteten Form zu sehen, nämlich nachdem die Hilfslinien 14 zu Teiloberflächen 22 vereinfacht wurden. Dies entspricht dem Übergang von Fig. 2c zu Fig. 2d. Im Falle der in Fig. 3e und 3g eingezeichneten Topologien wurde dabei der "Verbindungsmodus" verwendet.

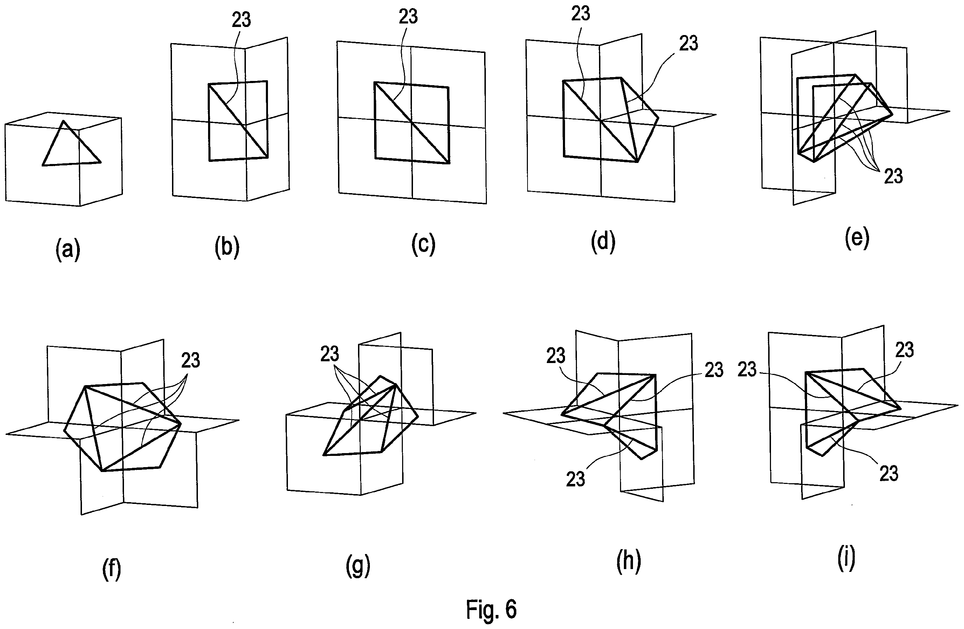

Eine weitere Bearbeitungsmöglichkeit der resultierenden Teil-Hyperflächen 22 - und damit schlussendlich der Gesamt-Hyperfläche - besteht darin, dass sämtliche Flächen durch Einführung von zusätzlichen Stützlinien 23 zu Dreiecken reduziert werden (siehe Fig. 6). Einerseits können derartige Dreiecke eine glattere und homogenere Gesamt-Oberfläche erzeugen. Ein weiterer Vorteil besteht insbesondere in einer gegebenenfalls weiteren Bearbeitung oder Visualisierung der Daten auf einem elektronischen Rechner, da heutige Grafikkarten besonders einfach mithilfe einer Anzahl von einzelnen Dreiecken angesprochen werden können, wobei die Grafikkarte die räumliche Lage und die daraus resultierenden Licht-, Farb- und sonstigen räumlichen Effekte selbst berechnet. Der Zentralprozessor (CPU) kann dadurch deutlich entlastet werden und/oder die Visualisierung der Ergebnisse kann deutlich schneller erfolgen. Zwischenzeitlich kann es sich auch als sinnvoll erweisen, wenn Teile der für das Verfahren erforderlichen Berechnungen von der CPU (dem Zentralprozessor) auf die GPU (grafische Prozessoreinheit) verlagert wird.

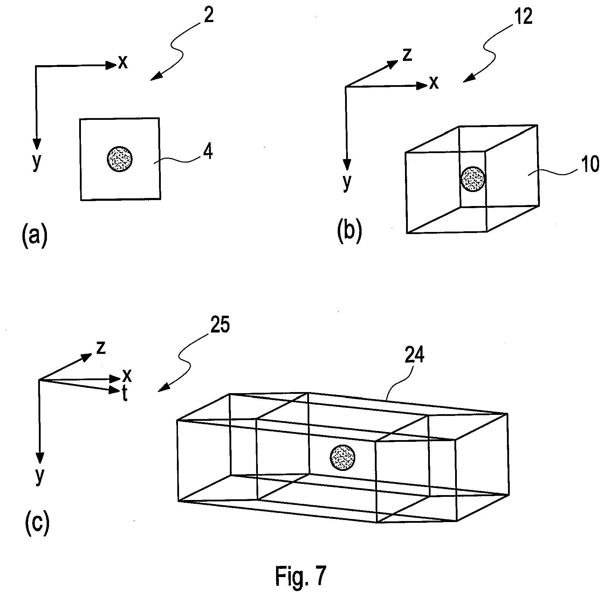

In Fig. 7 bis 9 ist der Übergang des Algorithmus von zweidimensionalen über dreidimensionale bis hin zu vierdimensionalen Daten dargestellt.

In Fig. 7 ist in Fig. 7a ein einzelner dunkler Bildpunkt 4 in einem 2D-Raster 2 dargestellt. In Fig. 7b ist ein einzelnes dunkles Voxel 10 in einem 3D-Gitter 12 zu erkennen. In Fig. 7c sind schließlich die analogen vierdimensionalen Verhältnisse, also ein dunkles Tesserakt 24 (ein "vierdimensionaler Würfel") in einem vierdimensionalen Gitter 25 dargestellt. Die Achsen des vierdimensionalen Gitters 25 sind mit X, Y und Z für die Raumachsen und t für die vierte Dimension (beispielsweise der Zeit) bezeichnet. Die Art der Darstellung des Tesserakts 24 in Fig. 7c kann man sich als ein zeitveränderliches Voxel denken. Die Darstellung des Tesserakts in Fig. 7c soll diese Zeitveränderlichkeit eines Voxels symbolisieren. Wie aus der Mathematik bekannt, wird ein zweidimensionales Objekt (in Fig. 7a ein Quadrat) durch eindimensionale Objekte begrenzt, vorliegend durch vier Linien. Demgegenüber wird ein Volumenelement (würfelförmiges Voxel 10 in Fig. 7b) durch Flächenelemente, vorliegend durch sechs Quadrate begrenzt. Das vierdimensionale Tesserakt in Fig. 7c wird dementsprechend durch dreidimensionale Körper, vorliegend acht Würfel begrenzt.

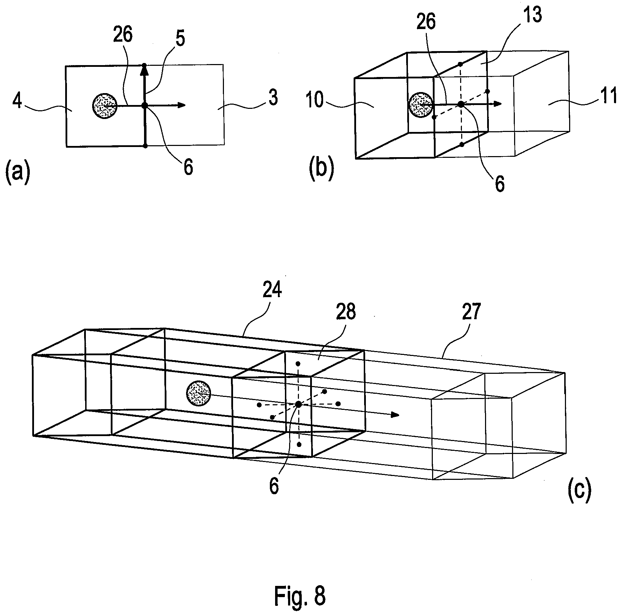

In Fig. 8 ist eine bevorzugte Konstruktion von Zwischen-Hyperflächen 5, 13 sowie von Stützpunkten 6 in zwei Dimensionen (Fig. 7a), drei Dimensionen (Fig.7b) und vier Dimensionen (Fig. 8c) dargestellt. Aus Veranschaulichungsgründen ist die jeweilige Konstruktion der Zwischen-Hyperflächen 5, 13 sowie der Stützpunkte 6 jeweils nur an einer Stelle dargestellt.

In Fig. 8a ist in einem zweidimensionalen Gitter ein durch einen Pfeil dargestellter Kontrastübergang 26 dargestellt (Pfeilrichtung von "dunkel" zu "hell"). Im vorliegend dargestellten Fall ist der linke Bildpunkt ein dunkler Bildpunkt 4, wohingegen der rechte Bildpunkt ein heller Bildpunkt 3 ist. Die Richtung des Kontrastübergangspfeils 26 geht von "dunkel" nach "hell". Wie bereits im Zusammenhang mit Fig. 2 erläutert, wird aufgrund des Kontrastübergangs 26 eine Zwischen-Hyperfläche 5 (im vorliegenden 2D-Fall eine Linie) vorgesehen. In der Mitte der 2D-Zwischen-Hyperfläche 5 wird der Stützpunkt 6 angeordnet.

Die Verhältnisse in drei Dimensionen sind in Fig. 8b dargestellt. Der Kontrastübergang 26 von einem dunklen Voxel 10 (links im Bild) zu einem hellen Voxel 11 (rechts im Bild) ist ebenfalls durch einen Kontrastübergangspfeil 26 dargestellt. Zwischen den beiden unterschiedlichen Voxeln 10, 11 wird ebenfalls eine Zwischen-Hyperfläche 13 (in drei Dimensionen eine vorliegend als Quadrat vorliegende Fläche 13) angeordnet. In der Mitte der Zwischen-Hyperfläche 13 wird ein (mittig angeordneter) Stützpunkt 6 vorgesehen.

Hierzu korrespondierend wird auch in vier Dimensionen (siehe Fig. 8c) zwischen zwei unterschiedlichen Tesserakten 24, 27 (dunkles Tesserakt 24 und helles Tesserakt 27) eine zwischenliegende Zwischen-Hyperfläche 28 vorgesehen, die im vorliegenden Fall in Form eines Zwischenwürfels 28 vorliegt. Analog zum zweidimensionalen sowie zum dreidimensionalen Fall wird auch im vierdimensionalen Fall in der Mitte des Zwischenwürfels 28 ein Stützpunkt 6 vorgesehen.

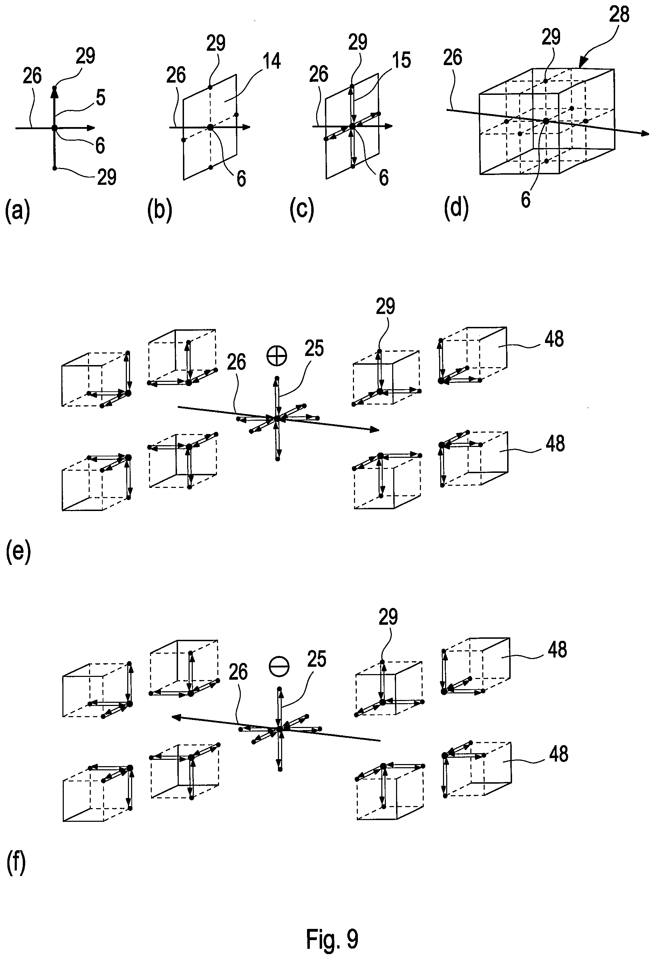

In Fig. 9 wird nunmehr die Konstruktion der Hilfskurven 5, 14 in unterschiedlichen Dimensionen erläutert. Wie bereits von den vorab erläuterten zweidimensionalen und dreidimensionalen Fällen her bekannt, werden die Stützpunkte 6 als Ausgangspunkte zur Konstruktion der (gegebenenfalls in unterschiedlichen Verfahrens-Stadien befindlichen) zu erzeugenden Hyperflächen verwendet. Im zweidimensionalen Fall (Fig. 9a) sind die Verbindungspunkte 29 dargestellt, an denen sich jeweils zwei Zwischenelemente 5 bzw. sich (diagonal) benachbarte Rasterelemente berühren. Die Verbindungsvektoren zwischen zwei miteinander zu verbindenden Stützpunkten 6 werden dabei über die Verbindungspunkte 29 geführt. In einem weiteren Schritt werden die Verbindungspunkte 29 entfernt (im Rahmen eines Optimierungsschritts), sodass sich eine direkte Verbindung zwischen zwei benachbarten Verbindungspunkten 6 ergibt und somit die entstehende Gesamt-Hyperfläche optimiert wird.

In Fig. 9b und 9c sind die Verhältnisse für den dreidimensionalen Fall erläutert. Auch hier werden die miteinander zu verbindenden Stützpunkte 6 über Verbindungspunkte 29 mithilfe von als Doppelvektoren ausgeführten Verbindungslinien 15 miteinander verbunden (siehe insbesondere Fig. 9c). Nachdem die Doppelvektoren jeweils miteinander zu geschlossenen Hilfskurven 14 (vergleiche Fig. 2c) verbunden wurden, liegen "Roh-Hyperflächen" vor, die bereits unterschiedliche Mannigfaltigkeiten von einschließenden Flächen darstellen, jedoch sinnvollerweise noch optimiert werden.

Die Verhältnisse in vier Dimensionen sind in den Fig. 9d bis f näher erläutert. In Fig. 9d ist ein Zwischenwürfel 28 dargestellt. Auch hier werden ausgehend von dem in der Mitte befindlichen Stützpunkt 6 über die - in vier Dimensionen - sechs Verbindungspunkte 29 als Doppelvektoren ausgeführte Verbindungslinien 25 (siehe Fig. 9e und 9f) zu den Stützpunkten 6 der benachbarten Zwischenwürfel 28 geführt. Fig. 9e ist eine Explosionszeichnung für den in Fig. 9d zusammenhängend dargestellten Zwischenwürfel 28, wobei die insgesamt acht Zwischenwürfel-Achtel 48 zu erkennen sind. In Fig. 9f ist gegenüber der Fig. 9e die Richtung des Kontrastübergangs 26 umgedreht (der Kontrastübergangspfeil 26 weist in die entgegengesetzte Richtung). Deshalb wird in den Fig. 9e und 9f einerseits zwischen dem mit "plus" bezeichneten Fall (Fig. 9e), bei dem der Kontrastübergang 26 in positiver X, Y, Z bzw. t-Richtung verläuft, andererseits dem mit "minus" bezeichneten Fall (Fig. 9f), bei dem der Kontrastübergang 26 in negativer X, Y, Z, bzw. t-Richtung verläuft, unterschieden. In vier Dimensionen ergibt sich nun eine größere Anzahl von Verbindungslinien 15.

In der folgenden Diskussion wird auf eine einzelne 2*2*2*2 Toxel-Nachbarschaft ("4D-Nachbarschafts-Zelle") innerhalb des vierdimensionalen Gitters Bezug genommen, die vorliegend ebenfalls durch ein Tesserakt dargestellt wird. Ein "Toxel" ist dabei ein vierdimensionales Hypervolumenelement, entspricht also einem Voxel (in drei Dimensionen) bzw. einem Pixel (in zwei Dimensionen). Innerhalb einer 4D-Nachbarschafts-Zelle können bis zu sechzehn Tesserakte entweder dunkel 24 oder hell 27 sein. Jedes dieser sechzehn Tesserakte wird innerhalb einer 4D-Nachbarschafts-Zelle also nur durch ein Sechzehntel des gesamten Hyper-Volumens der 4D-Nachbarschafts-Zelle repräsentiert. Ein einzelnes Tesserakt 24, 27 hat innerhalb einer 4D-Nachbarschafts-Zelle also nur vier nächste Nachbarn, mit denen es sich jeweils ein Achtel 48 eines Zwischenwürfels 28 (also ein Zwischenwürfel-Achfel 48) als Kontaktvolumen teilt. Insgesamt ergeben sich dann 192 unterschiedliche Pfade, auf denen die Stützpunkte 6 über zwischenliegende Verbindungspunkte 29 miteinander zu verbinden sind.

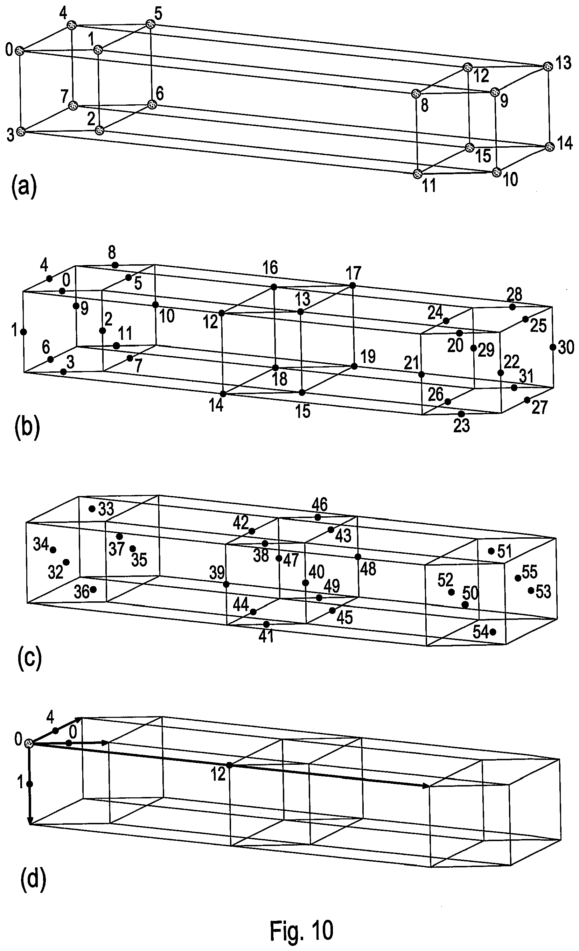

Die möglichen Triplette an unterschiedlichen Pfaden sind in Tab. I aufgelistet. Dabei wird die in Fig. 10 erläuterte Notation verwendet. In Fig. 10a ist zunächst einmal eine einzelne 4D-Nachbarschafts-Zelle (eines vierdimensionalen Gitterelements) dargestellt. Eine solche 4D-Nachbarschafts-Zelle erhält man, wenn man, ausgehend von einem bestimmten Toxel ("Ausgangs-Toxel"), in jeweils eine Richtung der insgesamt vier Raumdimensionen (nicht jedoch in die jeweilige Gegenrichtung) geht. Die sechzehn einzelnen Toxel dieser 4D-Nachbarschafts-Zelle sind mit den Zahlen 0-15 bezeichnet. Dabei bezeichnen die Ziffern 0 bis einschließlich 7 die "Vergangenheit", während die Ziffern 8 bis einschließlich 15 die "Zukunft" beschreiben. In Fig. 10b sind die Stützpunkte 6 der die einzelnen Toxel begrenzenden Volumen (Zwischenwürfel 28) durchnummeriert dargestellt. Diese entsprechen der in Tab. I mit "Center ID" bezeichneten Spalte. In Fig. 10c wiederum sind die Verbindungspunkte 29 für einander benachbarte Zwischenwürfel 28 mit ihrer jeweiligen Nummerierung eingezeichnet. Die in der Tab. I in den Pfaden verwendeten Ziffern und deren Bedeutung sind insbesondere den Fig. 10b und 10c zu entnehmen. In Fig. 10d ist zur Veranschaulichung ein Beispiel mit vier Kontrastübergangsvektoren 26 dargestellt. Als Beispiel wird dabei ein Toxel mit der Bezeichnung Nummer "0" mit positiver Orientierung in X-, Y-, Z-, und t-Richtung (also "plus") willkürlich herausgegriffen. Die vier Kontrastübergänge 26 (in X-, Y-, Z- und t-Richtung) sind dabei durch die miteinander in Beziehung stehenden, in der Mitte der Verbindungswürfel 28 angeordneten Stützpunkte 6 überlagert.

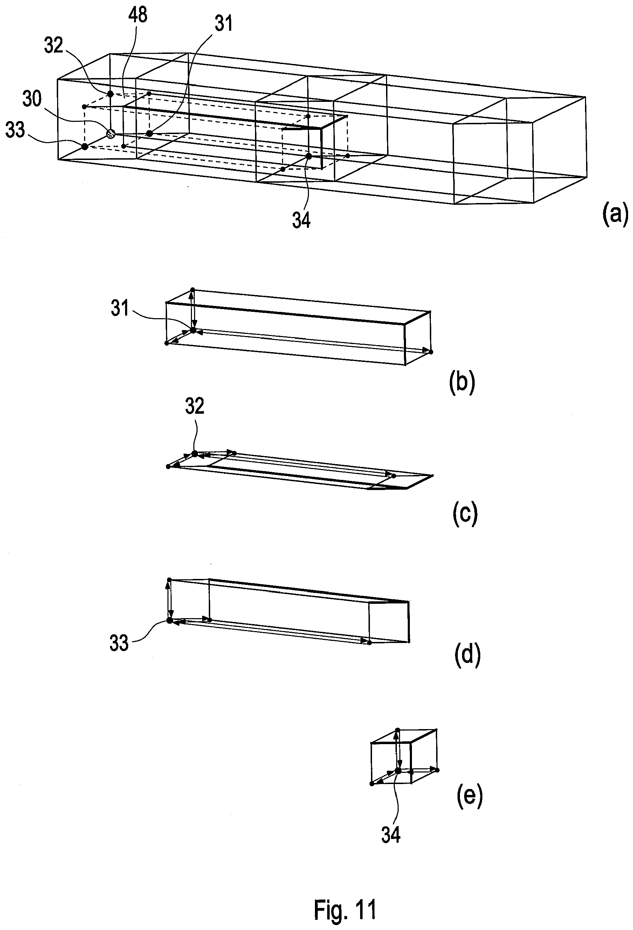

In Fig. 11 sind die vier Grenzvolumen 31, 32, 33, 34 (im vorliegend dargestellten Ausführungsbeispiel also die Achtel 48 eines Zwischenwürfels 28) für ein einzelnes Toxel mit der Bezeichnung 7 (siehe Fig. 10a) dargestellt. In Fig. 11a sind zunächst alle vier Achtel 48 eines Zwischenwürfels 28 (nämlich die Zwischenwürfel-Achtel 31, 32, 33, 34) innerhalb einer 4D-Nachbarschafts-Zelle dargestellt. In den Fig. 11b, c, d und e sind die einzelnen Achtel 48 des Zwischenwürfels 28 nochmals einzeln genauer dargestellt: In Fig. 11b ist das Volumenelement Nummer 11+ (in Fig. 11 mit Bezugszeichen 31 versehen) in positiver X-Richtung dargestellt. In Fig. 11c ist das Volumenelement Nummer 9- (in Fig. 11 mit dem Bezugszeichen 32 versehen) in negativer Y-Richtung dargestellt. Weiterhin ist in Fig. 11d das Volumenelement 6- (in Fig. 11 mit Bezugszeichen 33 bezeichnet) in negativer Z-Richtung dargestellt und in Fig. 11e schließlich ist das Volumenelement 18+ (in Fig. 11 mit dem Bezugszeichen 34 bezeichnet) in positiver t-Richtung dargestellt.

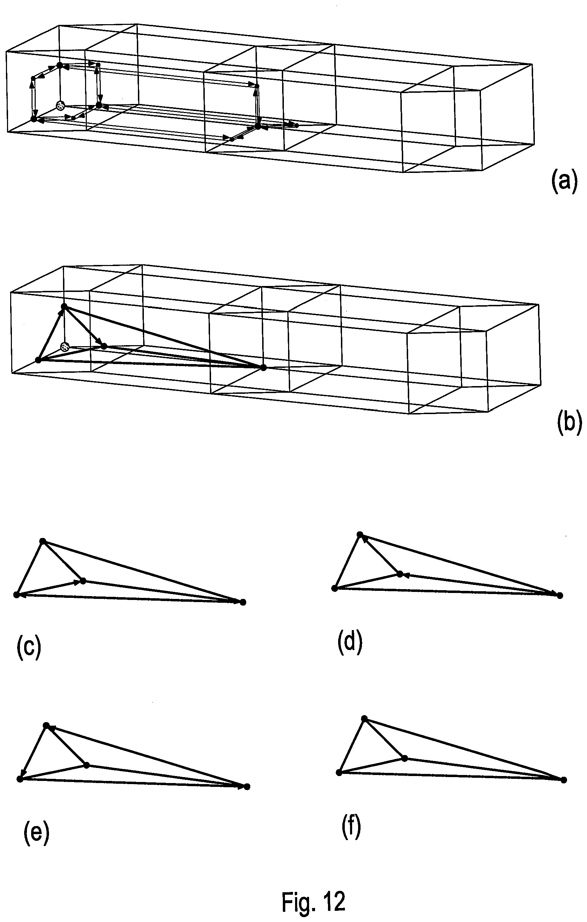

Fig. 12 schließlich führt die bereits beschriebene Fig. 11 weiter. In Fig. 12a sind die vier initialen zyklischen Vektorpfade eingezeichnet. Diese verlaufen längs der Punkte 37 → 11 → 36 → 6 → 34 → 9 → 37, längs der Punkte 36 → 11 → 49 → 18 → 44 → 6 → 36, längs der Punkte 47 →18 → 49 → 11 → 37 → 9 → 47 sowie längs der Punkte 34 → 6 → 44 → 18 → 47 → 9 34.

Hierbei ist zu beachten, dass es sich bei sämtlichen Punkten mit einer Ziffer ≥32 um Verbindungspunkte 29 handelt, die in einem Optimierungsschritt gestrichen werden. Nach diesem Optimierungsschritt ergibt sich somit schlussendlich der in Fig. 12b dargestellte optimierte zyklische Vektorpfad 11 → 6 → 9 → 11 (mitsamt dem in das vierdimensionale Tesserakt eingebetteten Tetraeder) für den ersten Vektorpfad, für den zweiten Vektorpfad der in Fig. 12c dargestellte optimierte Vektorpfad 11 → 18 → 6 → 11 (einschließlich des sich ergebenden Tetraeders), für den dritten Vektorpfad, der in Fig. 12d dargestellte optimierte zyklische Vektorpfad 18 → 11 → 9 → 18 (einschließlich des optimierten Tetraeders) sowie für den vierten Vektorpfad der in Fig. 12e dargestellte optimierte zyklische Vektorpfad 6 → 8 → 9 → 6 (einschließlich des optimierten Tetraeders). In Fig. 12f ist der optimierte Tetraeder nochmals in einer Darstellung ohne Vektorpfade gezeichnet. Auf die Darstellung der Kanten in Form von antiparallelen Vektoren wurde dabei aus Veranschaulichungsgründen verzichtet (obwohl diese nach wie vor vorliegen).

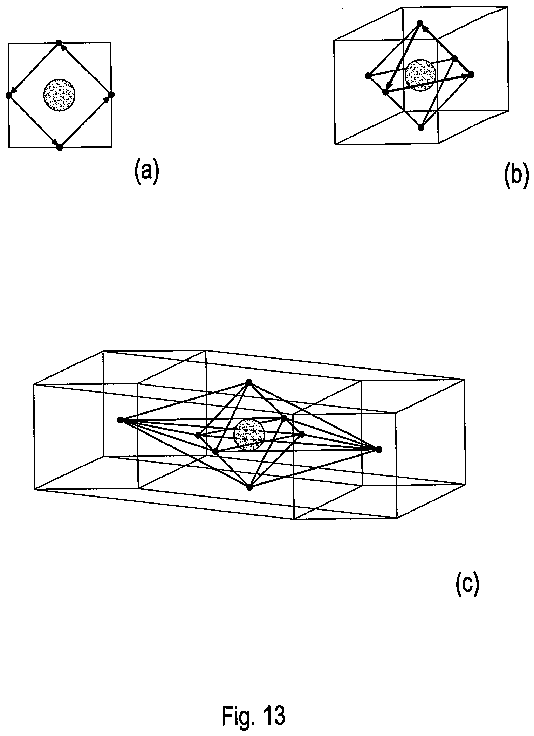

Somit ergibt sich schließlich die in Fig. 13c dargestellte Grenz-Hyperfläche in Form von sechzehn Tetraedern, denn insgesamt werden durch den vorgeschlagenen Algorithmus alle möglichen Lagen eines einzelnen dunklen Tesserakts 24, die sich innerhalb einer 4D-Nachbarschafts-Zelle ergeben können, bearbeitet. Die Tetraeder sind dabei vektoriell gerichtet, was jedoch aus Veranschaulichungsgründen nicht näher dargestellt ist. Zum Vergleich ist in Fig. 13 nochmals der zweidimensionale Fall (Fig. 13a) sowie der dreidimensionale Fall (Fig. 13b) dargestellt.

Auch in vier Dimensionen taucht das bereits im zweidimensionalen sowie im dreidimensionalen Fall auftretende Problem auf, wie verfahren werden soll, wenn dunkle 24 bzw. helle Gebiete 27 sich nicht in allen n-1 Dimensionen berühren (also lediglich eine (n-2)-dimensionale Hyperfläche und/oder eine noch niedriger-dimensionale Hyperfläche gemeinsam haben; siehe Fig. 1 c bzw. Fig. 4). In vier Dimensionen können dabei zusätzlich die Fälle unterschieden werden, dass sich zwei benachbarte Toxelelemente in einem Volumen berühren (also eine Fläche gemeinsam haben), sich längs einer Flä-che berühren (also eine Linie gemeinsam haben) oder sich längs eine Linie berühren (also einen. Gemeinsam haben). Analog zum dreidimensionalen Fall ist es in analoger Weise wenig sinnvoll, wenn man zwei zueinander korrespondierende Gebiete (also zwei helle Gebiete bzw. zwei dunkle Gebiete) als miteinander verbunden definiert, wenn sich diese im vierdimensionalen Fall lediglich entlang einer Fläche (gemeinsame Linie) oder lediglich längs eine Linie (gemeinsamer Punkt) berühren.

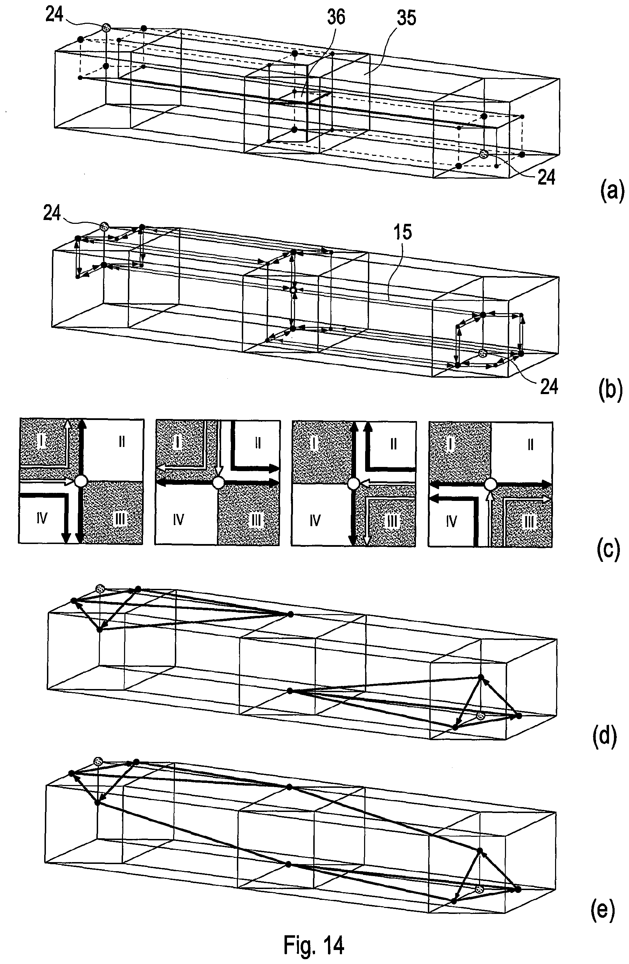

In Fig. 14 ist innerhalb einer 4D-Nachbarschafts-Zelle der Fall dargestellt, in dem zwei "gleichartige" Toxel (vorliegend Tesserakte) miteinander eine Berührungsfläch 36 gemeinsam haben. Die Berührungsfläche 36 ist in Fig. 14a im Berührungswürfel 35 zu erkennen. In Fig. 14b sind die initialen Verbindungslinien 15, die zwischen den einzelnen Stützpunkten 6 über die Verbindungspunkte 29 hinweg verlaufen, dargestellt. Diese Verbindungslinien liegen, wie bereits beschrieben und in Fig. 14b angedeutet, als antiparallele Doppelvektoren vor. Je nachdem, ob ein "Verbindungsmodus" oder ein "Trennungsmodus" gewählt wurde, wird im Bereich der Berührungsfläche 36 der entsprechende Vektor geeignet "abgeknickt" und fortgeführt. Dies ist in Fig. 14c dargestellt. Ist der "Verbindungsmodus" gewählt, so folgt die sich ergebende Hilfskurve 14 dem als schwarzen Pfeil eingezeichneten Pfad. Ist dagegen der "Trennungsmodus" aktiv, so folgt die Hilfskurve 14 dem durch einen weißen Doppelpfeil eingezeichneten Pfad.

In Fig. 14d ist das Ergebnis bei Verwendung des "Trennungsmodus" dargestellt, wohingegen in Fig. 14e das Ergebnis bei Verwendung des "Verbindungsmodus" dargestellt ist.

Der Vollständigkeit halber wird darauf hingewiesen, dass bei Verwendung des vorliegend vorgeschlagenen bevorzugten Ausführungsbeispiels eines Algorithmus im Falle von zwei "gleichartigen" Toxeln, die lediglich eine Verbindungslinie bzw. lediglich einen einzelnen Punkt gemeinsam haben, automatisch der "Trennungsmodus" verwendet wird. Selbstverständlich sind auch andere Vorgehensweisen möglich.

Selbstverständlich ist es auch im vierdimensionalen Fall - analog zum dreidimensionalen Fall, bei dem die Grenzfläche auf Dreiecke zurückgeführt wird - möglich, dass die Grenzvolumina auf Tetraeder zurückgeführt werden. Auch dies kann insbesondere numerische Vorteile und/oder Geschwindigkeitsvorteile, insbesondere bei der Verwendung von Grafikkarten mit eigenen Coprozessoren haben.

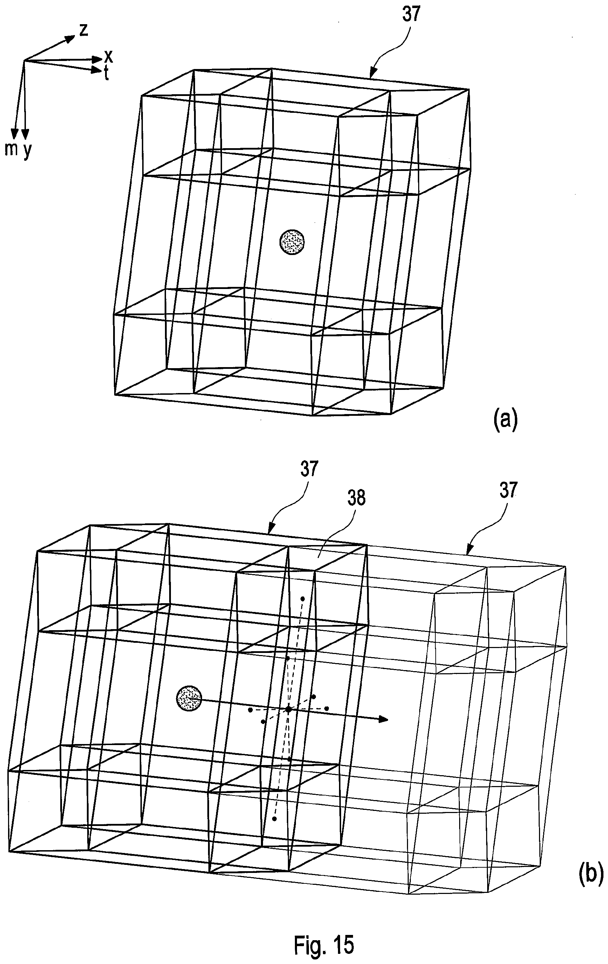

In Fig. 15 ist schließlich noch kurz die Anwendung des vorgeschlagenen Algorithmus für einen fünfdimensionalen Raum dargestellt. Im in Fig. 15a dargestellten Ausführungsbeispiel liegt ein fünfdimensionaler Hyperwürfel, ein so genanntes Penterakt 37 vor. Ein Penterakt 37 wird, wie aus der Mathematik bekannt ist, von zehn Tesserakten 38 begrenzt. In Fig. 15b ist dabei das Kontakt-Tesserakt 38, das die Verbindung zwischen zwei Penterakten 37 darstellt, eingezeichnet. Dabei ist das in der Zeichnung links eingezeichnete Penterakt 37 ein "dunkles" Penterakt, wohingegen das rechts dargestellte Penterakt 37 ein "helles" Penterakt ist. Zwischen den beiden Penterakten 37 der Fig. 15 liegt damit ein Kontrast vor, der durch den Kontrastübergangspfeil 26 dargestellt ist. Analog zu den niedriger-dimensionalen Fällen (in der vorherigen Beschreibung wurde der zweidimensionale, der dreidimensionale sowie der vierdimensionale Fall eingehend beschrieben) werden auch hier die längs des Kontrastübergangs 26 liegenden Verbindungs-Hyperelemente (vorliegend ein Tesserakt 38) zunächst auf ihren mittig liegenden Stützpunkt 6 reduziert. Ausgehend vom mittig liegenden Stützpunkt 6 werden über die jeweiligen Verbindungspunkte 29 als antiparallel liegende Vektoren ausgebildete Verbindungslinien zu den jeweils benachbarten Stützpunkten 6 gezogen.

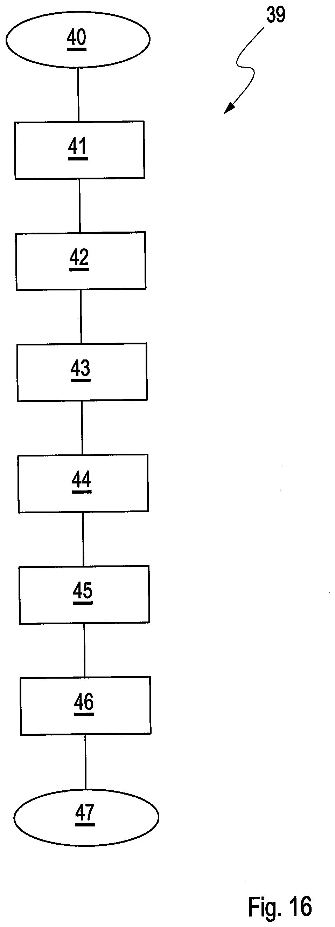

In Fig. 16 ist schließlich noch in einem schematischen Ablaufdiagramm ein Hyperflächen-Extraktionsverfahren 39 dargestellt. Zunächst werden die in Matrixform vorliegenden Daten (wobei die Matrizen eine entsprechende Dimension wie beispielsweise eine Dimension von vier aufweisen) in die entsprechende Vorrichtung eingelesen 40. Bei der Vorrichtung kann es sich beispielsweise um einen handelsüblichen, programmtechnisch gesteuerten Computer handeln. Vorzugsweise weist der Computer eine Mehrzahl von Prozessoren auf, da das vorgeschlagene Verfahren parallelisierbar ist, sodass auf diese Weise ein signifikanter Zeitgewinn bei der Berechnung der Hyperflächen realisiert werden kann.

Anschließend startet das Verfahren damit, dass zwischen zwei jeweils benachbarten Matrixelementen, zwischen denen ein Kontrastübergang vorliegt, vorläufige Hyperflächenbereich e identifiziert werden 41 ("Identifizierung von zwischenliegenden Zwischen-Hyperflächen"). Ob ein ausreichender Kontrastübergang vorliegt kann dabei durch entsprechende Parameter definiert werden. Insbesondere kann ein Grenzwert definiert werden, sodass ein ausreichender Kontrastübergang dann vorliegt, wenn die Daten in dem einen Matrixelement oberhalb des Grenzwertes und in dem dazu benachbarten Matrixelement unterhalb des Grenzwertes liegen.

Basierend auf den derart ermittelten vorläufigen Hyperflächenbereichen werden die jeweils im Zentrum der Hyperflächenbereiche liegenden Stützpunkte 6 berechnet 42. Anschließend wird in einem weiteren Verfahrensschritt 43 die Lage der Verbindungspunkte 29 berechnet. Mit dem Wissen um die Stützpunkte 6 und die Verbindungspunkte 29 werden anschließend die Verbindungslinien 15 in Form von antiparallelen Vektoren "verlegt" und zu Teil-Hyperflächen zusammengeführt (Verfahrensschritt 44). Die derart ermittelten Teil-Hyperflächen werden anschließend in einem weiteren Verfahrensschritt 45 zunächst optimiert und in einem sich anschließenden weiteren Verfahrensschritt 46 werden die optimierten Teil-Hyperflächen zu einer (gegebenenfalls auch zu mehreren) gesamten Grenz-Hyperfläche kombiniert. Die derart gewonnenen Daten werden in einem Ausgabeschritt gespeichert, wonach das Hyperflächen-Extraktionsverfahren 39 endet.

**Bezugszeichenliste:**

| | | | |
|---|---|---|---|
| 1. | Bild | 28. | Zwischenwürfel |
| 2. | zweidimensionales Raster | 29. | Verbindungspunkt |
| 3. | heller Bildpunkt | 30. | Toxel Nummer 7 |
| 4. | dunkler Bildpunkt | 31. | Volumenelement Nummer 11+ |
| 5. | Zwischen-Hyperfläche | | |
| 6. | Stützpunkt | 32. | Volumenelement Nummer 9- |
| 7. | geschlossene Kurve (entgegen Uhrzeigersinn) | 33. | Volumenelement Nummer 6- |
| 8. | geschlossene Kurve (im Uhrzeigersinn) | 34. | Volumenelement Nummer 18+ |
| 9. | Kontaktpunkt | | |
| 10. | dunkler Voxel | 35. | Berührungsvolumen |
| 11. | heller Voxel | 36. | Berührungsfläche |
| 12. | dreidimensionales Gitter | 37. | Penterakt |
| 13. | Fläche | 38. | Kontakt-Tesserakt |
| 14. | Hilfskurve | 39. | Hyperflächen-Extraktionsverfahren |
| 15. | Verbindungslinie | | |
| 16. | Dreieick | 40. | Daten einlesen |
| 17. | Oktaeder | 41. | Identifizierung Hyperflächenbereiche |
| 18. | Normalvektor | | |
| 19. | Kontaktlinie | 42. | Berechnung Stützpunkte |
| 20. | Begrenzungslinie | 43. | Berechnung Verbindungspunkte |
| 21. | Gesamtvolumen | | |
| 22. | Teil-Hyperfläche | 44. | Verlegung Hilfslinien und Berechnung der Teil- |
| 23. | Stützlinie | | |
| 24. | dunkles Tesserakt | | Hyperflächen |
| 25. | vierdimensionales Gitter | 45. | Optimierung der Teil-Hyperflächen |
| 26. | Kontrastübergang | | |
| 27. | helles Tesserakt | | |
| 46. | Zusammenfügung der Teil-Hyperflächen | 47. | Datenspeicherung |
| | | 48. | Zwischenwürfel-Achtel |

**Tab. 1**

| **Orientation** | **⊕** | | | **⊖** | | |
|---|---|---|---|---|---|---|
| **Center ID** | **Path 1** | **Path 2** | **Path 3** | **Path 1** | **Path 2** | **Path 3** |
| **0** | 32 → 0 → 33 | 33 → 0 → 38 | 38 → 0 → 32 | 33→ 0 → 32 | 32 → 0 → 38 | 38 → 0 → 33 |
| **1** | 34 → 1 → 32 | 32 → 1 → 39 | 39 → 1 → 34 | 32 → 1 → 34 | 34 → 1 → 39 | 39 → 1 → 32 |
| **2** | 32 → 2 → 35 | 35 → 2 → 40 | 40 → 2 → 32 | 35 → 2 → 32 | 32 → 2 → 40 | 40 → 2 → 35 |
| **3** | 36 → 3 → 32 | 32 → 3 → 41 | 41 → 3 → 36 | 32 → 3 → 36 | 36 → 3 → 41 | 41 → 3 → 32 |
| **4** | 33 → 4 → 34 | 34 → 4 → 42 | 42 → 4 → 33 | 34 → 4 → 33 | 33 → 4 → 42 | 42 → 4 → 34 |
| **5** | 35 → 5 → 33 | 33 → 5 → 43 | 43 → 5 → 35 | 33 → 5 → 35 | 35 → 5 → 43 | 43 → 5 → 33 |
| **6** | 34 → 6 → 36 | 36 → 6 → 44 | 44 → 6 → 34 | 36 → 6 → 34 | 34 → 6 → 44 | 44 → 6 → 36 |
| **7** | 36 → 7 → 35 | 35 → 7 → 45 | 45 → 7 → 36 | 35 → 7 → 36 | 36 → 7 → 45 | 45 → 7 → 35 |
| **8** | 33 → 8 → 37 | 37 → 8 → 46 | 46 → 8 → 33 | 37 → 8 → 33 | 33 → 8 → 46 | 46 → 8 → 37 |
| **9** | 37 → 9 → 34 | 34 → 9 → 47 | 47 → 9 → 37 | 34 → 9 → 37 | 37 → 9 → 47 | 47 → 9 → 34 |
| **10** | 35 → 10 → 37 | 37 → 10 → 48 | 48 → 10 → 35 | 37 → 10 → 35 | 35 → 10 → 48 | 48 → 10 → 37 |
| **11** | 37 → 11 → 36 | 36 → 11 → 49 | 49 → 11 → 37 | 36 → 11 → 37 | 37 → 11 → 49 | 49 → 11 → 36 |
| **12** | 39 → 12 → 38 | 38 → 12 → 42 | 42 → 12 → 39 | 38 → 12 → 39 | 39 → 12 → 42 | 42 → 12 → 38 |
| **13** | 38 → 13 → 40 | 40 → 13 → 43 | 43 → 13 → 38 | 40 → 13 → 38 | 38 → 13 → 43 | 43 → 13 → 40 |
| **14** | 41 → 14 → 39 | 39 → 14 → 44 | 44 → 14 → 41 | 39 → 14 → 41 | 41 → 14 → 44 | 44 → 14 → 39 |
| **15** | 40 → 15 → 41 | 41 → 15 → 45 | 45 → 15 → 40 | 41 → 15 → 40 | 40 → 15 → 45 | 45 → 15 → 41 |
| **16** | 46 → 16 → 47 | 47 → 16 → 42 | 42 → 16 → 46 | 47 → 16 → 46 | 46 → 16 → 42 | 42 → 16 → 47 |
| **17** | 48 → 17 → 46 | 46 → 17 → 43 | 43 → 17 → 48 | 46 → 17 → 48 | 48 → 17 → 43 | 43 → 17 → 46 |
| **18** | 47 → 18 → 49 | 49 → 18 → 44 | 44 → 18 → 47 | 49 → 18 → 47 | 47 → 18 → 44 | 44 → 18 → 49 |
| **19** | 49 → 19 → 48 | 48 → 19 → 45 | 45 → 19 → 49 | 48 → 19 → 49 | 49 → 19 → 45 | 45 → 19 → 48 |
| **20** | 51 → 20 → 50 | 50 → 20 → 38 | 38 → 20 → 51 | 50 → 20 → 51 | 51 → 20 → 38 | 38 → 20 → 50 |
| **21** | 50 → 21 → 52 | 52 → 21 → 39 | 39 → 21 → 50 | 52 → 21 → 50 | 50 → 21 → 39 | 39 → 21 → 52 |
| **22** | 53 → 22 → 50 | 50 → 22 → 40 | 40 → 22 → 53 | 50 → 22 → 53 | 53 → 22 → 40 | 40 → 22 → 50 |
| **23** | 50 → 23 → 54 | 54 → 23 → 41 | 41 → 23 → 50 | 54 → 23 → 50 | 50 → 23 → 41 | 41 → 23 → 54 |
| **24** | 52 → 24 → 51 | 51 → 24 → 42 | 42 → 24 → 52 | 51 → 24 → 52 | 52 → 24 → 42 | 42 → 24 → 51 |
| **25** | 51 → 25 → 53 | 53 → 25 → 43 | 43 → 25 → 51 | 53 → 25 → 51 | 51 → 25 → 43 | 43 → 25 → 53 |
| **26** | 54 → 26 → 52 | 52 → 26 → 44 | 44 → 26 → 54 | 52 → 26 → 54 | 54 → 26 → 44 | 44 → 26 → 52 |
| **27** | 53 → 27 → 54 | 54 → 27 → 45 | 45 → 27 → 53 | 54 → 27 → 53 | 53 → 27 → 45 | 45 → 27 → 54 |
| **28** | 55 → 28 → 51 | 51 → 28 → 46 | 46 → 28 → 55 | 51 → 28 → 55 | 55 → 28 → 46 | 46 → 28 → 51 |
| **29** | 52 → 29 → 55 | 55 → 29 → 47 | 47 → 29 → 52 | 55 → 29 → 52 | 52 → 29 → 47 | 47 → 29 → 55 |
| **30** | 55 → 30 → 53 | 53 → 30 → 48 | 48 → 30 → 55 | 53 → 30 → 55 | 55 → 30 → 48 | 48 → 30 → 53 |
| **31** | 54 → 31 → 55 | 55 → 31 → 49 | 49 → 31 → 54 | 55 → 31 → 54 | 54 → 31 → 49 | 49 → 31 → 55 |

## Patentansprüche

1. Verfahren zur Bearbeitung von in einer vierdimensionalen Daten-Matrix als Matrix-Elemente (24, 27) gespeicherten zeitlich veränderlichen Messwerten, die ein zeitlich veränderliches 3D-Volumenelement beschreiben und als Toxel bezeichnet werden, wobei aus den Messwerten (24, 27) der Daten-Matrix Grenz-Hyperflächen bestimmt werden, die als Grenzkonturen eine Begrenzung zwischen Messwerten, die unterhalb eines Grenzwerts liegen, und Messwerten, die oberhalb dieses Grenzwerts liegen, darstellen und zwischen denen somit ein Kontrastübergang (26) vorliegt, wobei die Messwerte medizintechnische Messwerte sind und als Materialeigenschaft die Dichte eines Gewebes beschreiben und wobei die Grenz-Hyperflächen unterschiedliche Gewebebereiche unterscheiden,
aufweisend die folgenden Schritte:
- Einlesen der Messwerte aus der vierdimensionalen Daten-Matrix in einen Computer;
- Identifizieren von jeweils benachbarten Matrix-Elementen (24, 27), zwischen denen einen Kontrastübergang (26) vorliegt;
- Vorsehen jeweils einer Zwischen-Hyperfläche (28) zwischen den identifizierten benachbarten Matrix-Elementen (24, 27) mit einem Kontrastübergang (26), wobei die Zwischen-Hyperfläche ein Zwischenwürfel (28) ist und einem Teil der zu bestimmenden Grenz-Hyperfläche entspricht;
- Repräsentieren eines Zwischenwürfels (28) durch einen im Zentrum des Zwischenwürfels (28) berechneten Stützpunkt (6) und durch sechs Verbindungspunkte (29), an denen sich jeweils zwei benachbarte Zwischenwürfel (28) berühren, wobei ein Verbindungspunkt (29) jeweils im Zentrum einer Grenzfläche des Zwischenwürfels (28) liegt;
- Vorsehen von jeweils als Doppelvektoren ausgeführten Verbindungslinien (25) zwischen dem Stützpunkt (6) und jedem der sechs Verbindungspunkte (29) der Zwischenwürfel (28);
- Festlegen von Pfaden entlang der Verbindungslinien (25), auf denen die Stützpunkte (6) der Zwischenwürfel (28) direkt benachbarter Toxel über zwischenliegende Verbindungspunkte (29) zu verbinden sind, wobei jedem Stützpunkt (6) eines Zwischenwürfels (28) ein Triplett an Pfaden zugewiesen wird und jeder Pfad eines Tripletts von einen Verbindungspunkt (9) des Zwischenwürfels (28) zu dem Stützpunkt (6) und weiter zu einem anderen Verbindungspunkt (9) des Zwischenwürfels (28) führt, wobei für einen Kontrastübergang (26) in positiver Richtung und für einen Kontrastübergang (26) in negativer Richtung entsprechend Pfade mit unterschiedlicher Orientierung ("plus", "minus") vorgesehen werden;
- Verbinden der Stützpunkte (6) und der Verbindungspunkte (29) durch geschlossene Kurven, die entlang der Pfade mit entsprechend dem Kontrastübergang (26) unterschiedlicher Orientierung verlaufen;
- Kombinieren der durch die geschlossenen Kurven gebildeten Teil-Hyperflächen zu zumindest einer Grenz-Hyperfläche.

2. Verfahren nach Anspruch 1, **dadurch gekennzeichnet, dass** eine 4D-Nachbarschaftszelle mit sechzehn Toxeln bestimmt wird, wobei jedes Toxel der 4D-Nachbarschaftszelle mit jeweils einem von vier direkt benachbarten Toxeln über einen Zwischenwürfel (28) in Verbindung steht.

3. Verfahren nach Anspruch 2, **dadurch gekennzeichnet, dass** ein Zwischenwürfel (28) in Zwischenwürfel-Achtel (48) aufgeteilt wird, die ein Kontaktvolumen zwischen jeweils zwei benachbarten Toxeln einer 4D-Nachbarschafltszelle bilden, wobei jedem Zwischenwürfel-Achtel (48) ein Stützpunkt (6) und drei Verbindungspunkte (29) mit den zugehörigen Verbindungslinien (25) zugeordnet werden.

4. Verfahren nach einem der Ansprüche 1 bis 3, **dadurch gekennzeichnet, dass** 192 unterschiedliche Pfade zum Verbinden der Stützpunkte zweier benachbarter Zwischenwürfel (28) über einen Verbindungspunkt (29) definiert werden.

5. Verfahren nach einem der vorangehenden Ansprüche, **dadurch gekennzeichnet, dass** in dem Fall, dass zwei benachbarte Matrix-Elemente (24, 27) eine Fläche (36) oder eine Linie oder einen Punkt gemeinsam haben, so dass von einem Verbindungspunkt (29) zwei mögliche Pfade ausgehen, die zu einem Stützpunkt (6) desselben oder des benachbarten Matrix-Elements (24, 27) führen, ein Verbindungsmodus oder ein Trennungsmodus gewählt wird.

6. Verfahren nach Anspruch 5, **dadurch gekennzeichnet, dass** im Verbindungsmodus ein Vektorpfad gewählt wird, der zu einem Stützpunkt (6) des benachbarten Matrix-Elements (24, 27) führt, und im Trennungsmodus ein Vektorpfad gewählt wird, der zu einem Stützpunkt (6) des selben Matrix-Elements (24, 26) führt.

7. Verfahren nach einem der vorangehenden Ansprüche, **dadurch gekennzeichnet, dass** eine geschlossene Kurve und/oder eine Teil-Hyperfläche optimiert wird.

8. Verfahren nach einem der vorangehenden Ansprüche, **dadurch gekennzeichnet, dass** ein Stützpunkt (6) und/oder Stützpunkte (6) verbindende geschlossene Kurven (5, 14, 15, 25) und/oder eine Teil-Hyperfläche und/oder ein Teil zumindest einer Grenz-Hyperfläche in Abhängigkeit von den Datenwerten der benachbarten Matrix-Elemente (24, 27) gelegt und/oder verschoben werden.

9. Verfahren nach einem der vorangehenden Ansprüche, **dadurch gekennzeichnet, dass** der Grenzwert zeitweise und/oder bereichsweise veränderlich ist.

10. Verfahren nach einem der vorangehenden Ansprüche, **gekennzeichnet durch** einen Verfahrensschritt, bei dem eine zusätzliche Stützstruktur (23) bei zumindest einer Grenz-Hyperfläche eingefügt wird.

11. Verfahren nach einem der vorangehenden Ansprüche, insbesondere nach Anspruch 10, **gekennzeichnet durch** einen Glättungs-Schritt für eine Grenz-Hyperfläche.

12. Verfahren nach einem der vorangehenden Ansprüche, **dadurch gekennzeichnet, dass** die zeitlich veränderlichen Messwerte der Daten-Matrix Bildwerte und/oder physikalische Messwerte, bevorzugt medizinische Messwerte, darstellen.

13. Vorrichtung, insbesondere Computervorrichtung, welche derart ausgebildet und eingerichtet ist, dass sie ein Verfahren nach einem der Ansprüche 1 bis 12 durchführt.

## Claims

1. Method for processing of time-variable measured values saved in a four-dimensional data matrix as matrix elements (24, 27), which describe a time-variable 3D volume element and are referred to as toxels, wherein boundary hypersurfaces are determined from said measured values (24, 27) of said data matrix and represent as boundary contours a limit between measured values that are below a limit value and measured values that are above said limit value, and between which a contrast transition (26) thus applies, wherein said measured values are medical measured values and describe as a material property the density of a tissue, and wherein said boundary hypersurfaces distinguish differing tissue regions,
the method having the following steps:
- reading said measured values from said four-dimensional data matrix into a computer;
- identifying adjacent matrix elements (24, 27), between which a contrast transition (26) applies;
- providing one intermediate hypersurface (28) each between said identified adjacent matrix elements (24, 27) with a contrast transition (26), wherein said intermediate hypersurface is an intermediate cube (28) and corresponds to part of the boundary hypersurface to be determined;
- representing an intermediate cube (28) by a support point (6) calculated in the center of said intermediate cube (28) and by six connecting points (29) at each of which two adjacent intermediate cubes (28) make contact, wherein each connecting point (29) is in the center of a boundary surface of said intermediate cube (28);
- providing connecting lines (25) each designed as double vectors between said support point (6) and each of said six connecting points (29) of said intermediate cubes (28);
- stipulating paths along said connecting lines (25), on which said support points (6) of said intermediate cubes (28) of directly adjacent toxels are to be connected via connecting points (29) in between, wherein each support point (6) of an intermediate cube (28) is assigned a triplet of paths and each path of a triplet leads from a connecting point (9) of said intermediate cube (28) to said support point (6) and further on to another connecting point (9) of said intermediate cube (28), wherein for a contrast transition (26) in the positive direction and for a contrast transition (26) in the negative direction corresponding paths with differing orientation ("plus", "minus") are provided;
- connecting said support points (6) and said connecting points (29) by closed curves running along said paths with differing orientation depending on the contrast transition (26);
- combining the partial hypersurfaces formed by the closed curves into at least one boundary hypersurface.

2. Method according to claim 1, **characterized in that** a 4D neighbourhood cell with sixteen toxels is determined, wherein each toxel of the 4D neighbourhood cell is connected to one of four directly adjacent toxels via an intermediate cube (28).

3. Method according to claim 2, **characterized in that** an intermediate cube (28) is split into intermediate cube eighths (48) which form a contact volume between each two adjacent toxels of a 4D neighbourhood cell, wherein each intermediate cube eighth (48) is assigned one support point (6) and three connecting points (29) with the associated connecting lines (25).

4. Method according to one of claims 1 to 3, **characterized in that** 192 different paths are defined for connecting the support points of two respectively adjacent intermediate cubes (28) each via one connecting point (29).

5. Method according to one of the preceding claims, **characterized in that** a connection mode or a separation mode is selected in the case that two adjacent matrix elements (24, 27) have a surface (36) or a line or a point in common, such that from one connecting point (29) two possible paths extend that lead to a support point (6) of the same or of the adjacent matrix element (24, 27).

6. Method according to claim 5, **characterized in that** in the connection mode a vector path is selected that leads to a support point (6) of the adjacent matrix element (24, 27), and in the separation mode a vector path is selected that leads to a support point (6) of the same matrix element (24, 26).

7. Method according to one of the preceding claims, **characterized in that** a closed curve and/or a partial hypersurface is/are optimized.

8. Method according to one of the preceding claims, **characterized in that** a support point (6) and/or closed curves (5, 14, 15, 25) connecting support points (6) and/or a partial hypersurface and/or a part of at least one boundary hypersurface are placed and/or displaced depending on the data values of the adjacent matrix elements (24, 27).

9. Method according to one of the preceding claims, **characterized in that** the limit value is variable depending on time and/or on region.

10. Method according to one of the preceding claims, **characterized by** a method step in which an additional supporting structure (23) is inserted in at least one boundary hypersurface.

11. Method according to one of the preceding claims, in particular according to claim 10, **characterized by** a smoothing step for a boundary hypersurface.

12. Method according to one of the preceding claims, **characterized in that** the time-variable measured values of the data matrix represent image values and/or physical measured values, preferably medical measured values.

13. Device, in particular a computer device, which is designed and set up such that it performs a method according to one of claims 1 to 12.

## Revendications

1. Procédé pour le traitement de valeurs de mesure variables en fonction du temps, enregistrées sous forme d'éléments de matrice (24, 27) dans une matrice quadridimensionnelle, lesquelles valeurs de mesure décrivent un élément de volume en 3D variable en fonction du temps et sont nommées « toxels », sachant que des hypersurfaces limites sont déterminées à partir des valeurs de mesure (24, 27) de ladite matrice, lesquelles hypersurfaces limites représentent comme contours limites une délimitation entre les valeurs de mesure situées en-dessous d'une valeur seuil et les valeurs de mesure situées au-dessus de ladite valeur seuil et entre lesquelles se trouve ainsi une transition de contraste (26), sachant que les valeurs de mesure sont des valeurs de mesure d'appareils médicaux et décrivent en tant que caractéristique du matériau la densité d'un tissu et sachant que les hypersurfaces limites distinguent différentes portions de tissu,
présentant les étapes suivantes :
- lecture des valeurs de mesure provenant de la matrice quadridimensionnelle dans un ordinateur ;
- identification des éléments de matrice (24, 27) voisins entre lesquels existe une transition de contraste (26) ;
- établissement d'une hypersurface intermédiaire (28) entre les éléments de matrice (24, 27) voisins identifiés présentant une transition de contraste (26), sachant que l'hypersurface intermédiaire est un cube intermédiaire (28) et correspond à une partie de l'hypersurface limite à déterminer ;
- représentation d'un cube intermédiaire (28) par un point de référence (6) calculé au centre du cube intermédiaire (28) et par six points de liaison (29) au niveau de chacun desquels se touchent deux cubes intermédiaires (28) voisins, sachant que chaque point de liaison (29) se situe au centre d'une surface limite du cube intermédiaire (28) ;
- établissement de lignes de liaison (25) réalisées sous la forme de doubles vecteurs entre le point de référence (6) et chacun desdits six points de liaison (29) desdits cubes intermédiaires (28) ;
- définition des chemins le long des lignes de liaison (25) sur lesquels les points de référence (6) des cubes intermédiaires (28) des toxels directement voisins sont à relier par des points de liaison (29) intermédiaires, sachant qu'à chaque point de référence (6) d'un cube intermédiaire (28) est attribué un triplet de chemins et que chaque chemin d'un triplet mène d'un point de liaison (9) du cube intermédiaire (28) au point de référence (6) puis vers un autre point de liaison (9) du cube intermédiaire (28), sachant que pour une transition de contraste (26) dans le sens positif et pour une transition de contraste (26) dans le sens négatif sont établis des chemins correspondants d'orientation différente (« plus », « moins ») ;
- liaison des points de référence (6) et des points de liaison (29) par des courbes fermées qui s'étendent le long des chemins d'orientation différente selon la transition de contraste (26) ;
- combinaison des hypersurfaces partielles formées par lesdites courbes fermées pour former au moins une hypersurface limite.

2. Procédé selon la revendication 1, **caractérisé en ce qu'**une cellule du voisinage en 4D présentant seize toxels est déterminée, sachant que chaque toxel de la cellule du voisinage en 4D est en relation avec un des quatre toxels directement voisins par le biais d'un cube intermédiaire (28).

3. Procédé selon la revendication 2, **caractérisé en ce qu'**un cube intermédiaire (28) est divisé en huitièmes de cube intermédiaire (48) qui forment un volume de contact entre deux toxels voisins d'une cellule du voisinage en 4D, sachant qu'un point de référence (6) et trois points de liaison (29) avec les lignes de liaison correspondantes (25) sont attribués à chaque huitième de cube intermédiaire (48).

4. Procédé selon une des revendications 1 à 3, **caractérisé en ce que** 192 chemins différents sont définis pour relier les points de référence de deux cubes intermédiaires (28) voisins par un point de liaison (29).

5. Procédé selon une des revendications précédentes, **caractérisé en ce qu'**un mode de liaison ou un mode de séparation est choisi dans le cas où deux éléments de matrice voisins (24, 27) ont en commun une surface (36) ou une ligne ou un point, de telle sorte que d'un point de liaison (29) partent deux chemins possibles et mènent à un point de référence (6) du même élément de matrice (24, 27) ou de l'élément de matrice voisin.

6. Procédé selon la revendication 5, **caractérisé en ce qu'**en mode de liaison est choisi un chemin vectoriel qui mène à un point de référence (6) de l'élément de matrice voisin (24, 27) et qu'en mode de séparation est choisi un chemin vectoriel qui mène à un point de référence (6) du même élément de matrice (24, 26).

7. Procédé selon une des revendications précédentes, **caractérisé en ce qu'**une courbe fermée et/ou une hypersurface partielle est/sont optimisée(s).

8. Procédé selon une des revendications précédentes, **caractérisé en ce qu'**un point de référence (6) et/ou des courbes fermées (5, 14, 15, 25) reliant des points de référence (6) et/ou une hypersurface partielle et/ou une partie d'au moins une hypersurface limite sont placés et/ou déplacés en fonction des valeurs de données des éléments de matrice voisins (24, 27).

9. Procédé selon une des revendications précédentes, **caractérisé en ce que** la valeur seuil peut varier en fonction du temps et/ou de la zone.

10. Procédé selon une des revendications précédentes, **caractérisé par** une étape du procédé lors de laquelle une structure de référence supplémentaire (23) est ajoutée à au moins une hypersurface limite.

11. Procédé selon une des revendications précédentes, notamment selon la revendication 10, **caractérisé par** une étape de lissage pour une hypersurface limite.

12. Procédé selon une des revendications précédentes, **caractérisé en ce que** les valeurs de mesure de la matrice, variables en fonction du temps, représentent des valeurs d'images et/ou des valeurs de mesure physiques, de préférence des valeurs de mesure médicales.

13. Dispositif, notamment dispositif informatique, qui est conçu et configuré de sorte à exécuter un procédé selon une des revendications 1 à 12.
